(19) Europäisches Patentamt
European Patent Office
Office européen des brevets

(11) EP 3 305 820 B1

(12) # EUROPEAN PATENT SPECIFICATION

(45) Date of publication and mention of the grant of the patent:
**25.11.2020 Bulletin 2020/48**

(21) Application number: **16785074.2**

(22) Date of filing: **25.05.2016**

(51) Int Cl.:
***C08F 285/00*** (2006.01) ***C08F 265/06*** (2006.01)
***B01F 17/02*** (2006.01) ***B01F 17/42*** (2006.01)
***B01F 17/52*** (2006.01) ***C08F 2/26*** (2006.01)
***C08F 2/44*** (2006.01)

(86) International application number:
**PCT/JP2016/065377**

(87) International publication number:
**WO 2016/190325 (01.12.2016 Gazette 2016/48)**

(54) **AQUEOUS GEL-CONTAINING RESIN PARTICLE EMULSION AND METHOD FOR PREPARING SAID AQUEOUS GEL-CONTAINING RESIN PARTICLE EMULSION**

WÄSSRIGE GELHALTIGE HARZPARTIKELEMULSION UND VERFAHREN ZUR HERSTELLUNG DER WÄSSRIGEN GELHALTIGEN HARZPARTIKELEMULSION

ÉMULSION DE PARTICULES DE RÉSINE CONTENANT UN GEL AQUEUX ET PROCÉDÉ DE PRÉPARATION DE LADITE ÉMULSION DE PARTICULES DE RÉSINE CONTENANT UN GEL AQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.05.2015 JP 2015109133**

(43) Date of publication of application:
**11.04.2018 Bulletin 2018/15**

(73) Proprietor: **Saiden Chemical Industry Co., Ltd.**
**Tokyo 103-0023 (JP)**

(72) Inventors:
- **KANEDAI Shuichi**
**Saitama-shi**
**Saitama 336-0026 (JP)**
- **KIJIMA Kenji**
**Saitama-shi**
**Saitama 336-0026 (JP)**
- **KOZUKA Junpei**
**Saitama-shi**
**Saitama 336-0026 (JP)**

(74) Representative: **Blodig, Wolfgang**
**Wächtershäuser & Hartz**
**Patentanwaltspartnerschaft mbB**
**Weinstrasse 8**
**80333 München (DE)**

(56) References cited:
**WO-A1-2014/142237**
**JP-A- H0 625 314**
**JP-A- H05 222 108**
**JP-A- H06 248 012**
**JP-A- 2007 518 550**
**JP-B1- 5 939 495**
**JP-B1- 5 971 665**
**US-A- 5 360 827**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 305 820 B1

## Description

### Technical Field

The present invention relates to an aqueous gel-encapsulating resin particle emulsion and a method for producing the aqueous gel-encapsulating resin particle emulsion. In more detail, the present invention relates to an aqueous gel-encapsulating resin particle emulsion that is a resin particle emulsion having excellent storage stability such that separation and sedimentation of resin particles are suppressed even though the resin particle emulsion has an extremely large average particle diameter of 1000 nm or larger, which has never been obtained by conventional techniques, and the present invention also relates to a production method through which the aqueous gel-encapsulating resin particle emulsion can simply be obtained by making use of conventional emulsion polymerization.

### Background Art

Conventionally, methods for producing various kinds of polymers having a core-shell structure have been known, and various methods for producing a hollow particle having a vacant portion inside by making use of these techniques have also been known. In recent years, hollow particles have been used for various applications, and the demand for hollow particles has been increasingly spreading. For example, in Patent Literature 1, there is proposed a method for producing a multi-layered polymer particle having pores inside, which is useful as a bonding agent or an opacifying agent in compositions for coating, impregnation, and molding. Specifically, the method solves the problem of instability or the like of a polymer that contains a relatively large amount of a copolymerized acid in the core, and by the method,
a hollow particle is prepared in such a way that a particle having a three-layered core-shell structure is neutralized with an alkali to water-solubilize the core portion in the particle, and the particle is then dried to make the core portion in the particle hollow. Moreover, Patent Literature 2 discloses a method by which even a latex that contains a hollow polymer particle having a high Tg can stably be produced, the method proposed against a problem that the glass transition temperature (Tg) of the polymer cannot be made high in order to penetrate a base that is necessary for alkali neutralization sufficiently into the inside of the particle when a hollow polymer is produced.

Furthermore, in Patent Literature 3, there is proposed a multilayer structured emulsion particle having through pores within the particle, the emulsion particle being useful as an additive in coating agents for use in paints, paper coating, and information-recording paper, and so on. Specifically, it is disclosed that when the multilayer structured emulsion particle has, as a structure when the emulsion particle is dried, one or more through holes that connect the surface layer portion and inside of the particle and has particle diameters of 0.15 to 5.0 $\mu$m, the multilayer structured emulsion particle can be made more excellent in oil absorbency. In Examples, an emulsion having particle diameters of about 0.5 $\mu$m (500 nm) is described. In addition, according to studies conducted by the present inventors, in the case of a normal solid particle that is neither hollow nor porous, when the average particle diameter is about 250 nm, the emulsion can be made excellent in stability against separation and sedimentation, however when the average particle diameter is about 650 nm, the emulsion is inferior in stability against separation and sedimentation even though the emulsion is excellent in polymerization stability. Further, in the case where the average particle diameter is 700 nm or larger, the emulsion cannot be made favorable because such an emulsion is inferior in polymerization stability to begin with resulting in the occurrence of lots of aggregates, and, as a matter of course, is inferior in stability against separation and sedimentation. As described above, a hollow or porous particle is necessary in order to make an emulsion the particle of which has an average particle diameter of 500 nm or larger favorable. US 2016/024290 A1 discloses an aqueous dispersion of hollow polymer particles. US 5360827 A discloses a process for the preparation of latex containing hollow polymer particles.

### Citation List

#### Patent Literature

Patent Literature 1: Japanese Patent No. 2774145
Patent Literature 2: Japanese Patent No. 2679523
Patent Literature 3: Japanese Patent No. 3035423

## Summary of Invention

### Technical Problem

However, the method for producing a large hollow resin particle having particle diameters of 1 μm (1000 nm) or larger is particularly complicated and hard to control, and there has been a problem that the techniques in the present circumstances cannot sufficiently meet the potential demands for utilization of hollow resin particles that has been spreading in recent years. For example, actually produced hollow resin particles have particle diameters of about 500 nm at the largest even by use of the above-described conventional techniques. Particularly, when the average particle diameter of a resin particle emulsion obtained by conventional emulsion polymerization becomes large, as large as 500 nm or larger, there is a problem that the resin particle emulsion is inferior in storage stability and a tendency to cause separation and sedimentation increases even in hollow particles. To the contrary, in the present circumstances as described below, a resin particle emulsion product that is applicable to industrially wide range of demands and that is excellent in polymerization stability and stability against separation and sedimentation in spite of large particle diameters has not been obtained yet. As an effective method for solving the problem of separation and sedimentation of emulsion particles, it is general to increase the viscosity of the emulsion. However, products may be used at a low viscosity depending on the application, and it often occurs that the viscosity cannot be increased. In the case where the viscosity cannot be increased, it has been generally conducted that the amount of a surface active agent used is increased or that a surface active agent having an EO chain within the molecule, an ionic monomer, or the like is used in emulsion polymerization. However, even by these methods, when the average particle diameter becomes large, as large as 500 nm or larger, the tendency to cause separation and separation increases, and the emulsion becomes inferior in storage stability. Therefore, a sufficient effect has not been obtained yet.

Accordingly, an object of the present invention is to provide an excellent aqueous gel-encapsulating resin particle emulsion which is excellent in storage stability such that the tendency to cause separation and sedimentation is suppressed even though the emulsion has particle diameters of 1000 nm or larger, and which can be utilized industrially effectively, and further, another object of the present invention is to provide a production method that is capable of stably producing the aqueous gel-encapsulating resin particle emulsion having the excellent properties by a simple method that is excellent in polymerization stability.

### Solution to Problem

The present invention relates to the subject-matter of the claims 1 to 8. The objects are achieved by the present invention as follows.

The present invention provides [1]an aqueous gel-encapsulating resin particle emulsion containing a particle that contains: an alkali-swellable core portion containing a (meth) acrylic copolymer having an acid value of 200 to 400 mgKOH/g; and a resin portion encapsulating the core portion and having a non-alkali-swellable outermost layer of the particle, the non-alkali-swellable outermost layer formed using a hydrophobic monomer, wherein: the core portion is an aqueous gel encapsulating a solvent, the resin portion has a thickness of 10% or less of a diameter of the particle; and the particle has an average particle diameter of 1000 nm or larger and 5000 nm or smaller, the core portion is obtained by copolymerizing a monomer mixture comprising: an aliphatic alkyl (meth) acrylate (a1) whose alkyl group has a number of carbon atoms of 3 or less, a carboxy group-containing monomer (a2) ; and a monomer (a3) having a total number of carbon atoms of 8 to 17 in a range of 30 parts by mass or less when the total amount of the monomers (a1) to (a3) is 100 parts by mass; wherein the monomer (a3) having a total number of carbon atoms of 8 to 17 is a copolymerizable (meth)acrylate-based monomer represented by the following formula:

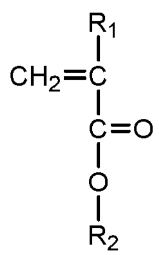

wherein $R_1$ represents a hydrogen atom or a methyl group, and $R_2$ represents a benzene ring- or aliphatic ring-containing group having a number of carbon atoms of 4 to 13.

Preferred embodiments of the aqueous gel-encapsulating resin particle emulsion according to [1] include: the aqueous gel-encapsulating resin particle emulsion further having one or more holes at a surface of the particle, and

having a ratio of a maximum opening diameter of the holes existing at the surface of the particle to a diameter of the particle of 10% or less.

Further, the present invention provides, as another embodiment, [3] a method for producing an aqueous gel-encapsulating resin particle emulsion including: using a seed particle having a core-shell structure and containing: an alkali swellable core portion; and a shell layer having a non-alkali-swellable outermost layer of the seed particle, the non-alkali-swellable outermost layer formed using a hydrophobic monomer; wherein the seed particle is a particle obtained such that a monomer mixture comprising: an aliphatic alkyl (meth)acrylate (a1) whose alkyl group has a number of carbon atoms of 3 or less; a carboxy group-containing monomer (a2) ; and a monomer (a3) having a total number of carbon atoms of 8 to 17 is subjected to copolymerization to obtain an alkali-swellable core particle comprising a (meth)acrylic copolymer having an acid value of 200 to 400 mgKOH/g, then a material comprising the core particle and a hydrophobic monomer is subjected to emulsion polymerization to turn the core particle into a core-shell particle in which the core particle is covered by a shell layer having a non-alkali-swellable outermost layer of the seed particle, the outermost layer formed using a hydrophobic monomer, and the core-shell particle is subjected to swelling treatment with an alkali under an alkaline condition of pH of 7.0 or higher; and
and stacking a non-alkali-swellable resin layer to be an outermost layer of the particle on the shell layer with a material containing a hydrophobic monomer to form a non-alkali-swellable resin portion, thereby producing an aqueous gel-encapsulating resin particle emulsion having an average particle diameter of particles of 1000 nm or larger and 5000 nm or smaller and having a thickness of the resin portion of 10% or less of a diameter of the particle in a state where the core portion is an aqueous gel encapsulating a solvent, wherein: as the seed particle, a particle in which an alkali-swellable core particle containing a (meth) acrylic copolymer having an acid value of 200 to 400 mgKOH/g is covered by the shell layer is used, the seed particle having an average particle diameter of 500 nm or larger after the particle is swollen with an alkali, having an alkali swelling ratio of 200% or more, the alkali swelling ratio determined by the following formula using the average particle diameters measured before and after the particle is swollen with the alkali; retaining a particle form while having a high alkali swelling ratio; and having a core-shell structure.

$$\text{Alkali swelling ratio (\%)} = \left\{ (\text{Average particle diameter after particle is swollen with alkali})^3 / (\text{average particle diameter before particle is swollen with alkali})^3 - 1 \right\} \times 100$$

wherein the monomer (a3) having a total number of carbon atoms of 8 to 17 is a copolymerizable (meth)acrylate-based monomer represented by the following formula:

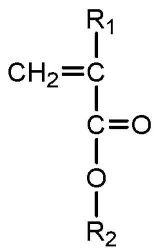

wherein $R_1$ represents a hydrogen atom or a methyl group, and $R_2$ represents a benzene ring- or aliphatic ring-containing group having a number of carbon atoms of 4 to 13, and wherein the monomer mixture for use in preparing the core particle comprises the monomer (a3) in a range of 30 parts by mass or less when a total amount of the monomers (a1) to (a3) is 100 parts by mass.

Preferred embodiments of the method for producing an aqueous gel-encapsulating resin particle emulsion according to [3] include the method for producing an aqueous gel-encapsulating resin particle emulsion, wherein the alkali swelling ratio is 400% or more.

Moreover, the preferred embodiments of the method for producing an aqueous gel-encapsulating resin particle emulsion according to [3] include: the method for producing an aqueous gel-encapsulating resin particle emulsion, wherein the monomer mixture for use in preparing the core particle further contains a crosslinkable monomer; and the method for producing an aqueous gel-encapsulating resin particle emulsion, wherein, in the emulsion polymerization, an emulsifying agent represented by the following formula is used in an amount within a range from 0.1 to 5 parts by mass in terms of the emulsifying agent itself relative to 100 parts by mass of the monomer mixture.

$$R\text{-}O\text{-}(CH_2CH_2O)_n\text{-}SO_3M$$

(in the formula above, n represents a number of 1 or more and less than 5, M represents any one of a metal ion, an ammonium ion, and an amine ion, and R represents an alkyl group or polycyclic phenyl group having a number of carbon atoms of 8 or more and less than 20.

Furthermore, preferred embodiments of the method for producing an aqueous gel-encapsulating resin particle emulsion according to [3] include: the method for producing an aqueous gel-encapsulating resin particle emulsion, wherein the shell layer constituting the seed particle contains two layers of an intermediate layer having a hydrophilicity lower than the hydrophilicity of the core portion, and a non-alkali-swellable outermost layer having a hydrophilicity lower than the hydrophilicity of the intermediate layer and being formed using a hydrophobic monomer; and the method for producing an aqueous gel-encapsulating resin particle emulsion, wherein a material containing a hydrophobic monomer for forming the outermost layer contains a crosslinkable monomer.

## Advantageous Effects of Invention

According to the present invention, there is provided an excellent aqueous gel-encapsulating resin particle emulsion which is excellent in storage stability such that the tendency to cause separation and sedimentation is suppressed even though the emulsion has particle diameters of 1000 nm or larger and which can be utilized industrially effectively, and further, there is also provided a production method that is capable of stably producing the aqueous gel-encapsulating resin particle emulsion by a simple method.

## Brief Description of Drawings

[Figure 1] Figure 1 shows a TEM image with 7000 magnifications of particles that constitute an aqueous gel-encapsulating resin particle emulsion of Example 1.

[Figure 2] Figure 2 shows a TEM image with 29000 magnifications of a particle that constitutes an aqueous gel-encapsulating resin particle emulsion of Example 1.

[Figure 3] Figure 3 shows an FE-SEM image with 30000 magnifications of an aqueous gel-encapsulating resin particle emulsion of Example 1.

[Figure 4] Figure 4 shows an FE-SEM image with 50000 magnifications of an aqueous gel-encapsulating resin particle emulsion of Example 1.

[Figure 5] Figure 5 shows a TEM image with 29000 magnifications of particles that constitute an aqueous gel-encapsulating resin particle emulsion of Comparative Example 1.

## Description of Embodiments

Hereinafter, the present invention will be described in more detail giving preferred embodiments for carrying out the present invention. It is to be noted that the term " (meth) acrylic" means both "acrylic" and "methacrylic", and the term "(meth)acrylate" means both "acrylate" and "methacrylate".

The "alkali swelling ratio" as referred to in the present invention means a value determined by the following formula using measured values obtained by measuring the average particle diameters before and after swelling treatment with an alkali in the case where the particle is subjected to swelling treatment with an alkali. The swelling treatment with an alkali means that a basic neutralizer is added into a container where a particle to be an object of measurement is placed to make the pH 7.0 or higher and the resultant mixture is left to stand at an internal temperature of 90°C for about 2 hours. As the basic neutralizer, volatile bases and/or nonvolatile bases can be used. Examples of the volatile base include ammonia water, triethylamine, and triethanolamine. Examples of the nonvolatile base include sodium hydroxide, potassium hydroxide, sodium carbonate, potassium carbonate, ammonium carbonate, sodium bicarbonate, potassium bicarbonate, and ammonium bicarbonate. Among them, volatile bases are preferable, and ammonia water is more preferable.

$$\text{Alkali swelling ratio (\%)} = \{(\text{Average particle diameter after particle is swollen with alkali})^3/(\text{average particle diameter before particle is swollen with alkali})^3 - 1\} \times 100$$

The present inventors have conducted diligent studies in order to solve the problems of the conventional techniques to find that a resin particle emulsion excellent in storage stability is obtained even though the particle has an average particle diameter of 1000 nm (1 μm) or larger, or 2000 nm (2 μm) or larger, which has conventionally been difficult to achieve, in such a way that the core portion existing in the particle is prepared as a highly swellable aqueous gel by allowing the core portion to encapsulate, for example, water as a solvent and that the thickness of the hydrophobic resin portion that covers the core portion is made to be thin, as thin as 10% or less of the diameter of the particle. More specifically, the present inventors have found a method for simply producing an emulsion of a core particle that is to be a core portion encapsulated in the emulsion particle and that is aqueous gel exhibiting a high alkali swelling ratio such that the core portion is swollen at a high level by a solvent such as water. Further, the present inventors have found that a state where the particle form is retained while having a high alkali swelling ratio can simply be made by covering the core particle with the resin portion the film thickness of which is thin. In this way, the present inventors have reached the present invention.

Description is made here on the core portion that constitutes the emulsion particle characterizing the present invention. More specifically, the major technical feature of the aqueous gel-encapsulating resin particle emulsion according to the present invention (hereinafter, also referred to as emulsion according to the present invention or emulsion particle according to the present invention) is that the aqueous gel that is swollen with water or the like under alkalinity, and that has an extremely high alkali swelling ratio is used as a core portion and the core portion is covered with a resin portion having a thin thickness. By adopting such constitution, the aqueous gel-encapsulating resin particle emulsion that is excellent in stability against separation and sedimentation and that has never conventionally been obtained can be obtained even though the average particle diameter is 1000 nm or larger. Further, the present invention provides a technique with which such a favorable emulsion is easily and surely obtained by a simple method that is excellent in polymerization stability. The excellent effects obtained by the present invention have been achieved by a seed particle containing an alkali-swellable core portion and a shell layer having a non-alkali-swellable outermost layer, the outermost layer formed using a hydrophobic monomer, the seed particle having large particle diameters, having a high swelling ratio, and having a core-shell structure. Hereinafter, description will be made on the seed particle that is for use in the present invention and that has a core-shell structure.

[Seed Particle]

(Core Particle)

The seed particle for use in the present invention encapsulates aqueous gel. In the seed particle, the aqueous gel that is swollen with a solvent such as water under alkalinity, that has an extremely high swelling ratio, as high as a swelling ratio of 200% or more, and more preferably 400% or more, and that encapsulates a solvent is contained as a core portion, and the core portion is covered by a non-alkali-swellable shell layer having a thin thickness. The core portion that constitutes the seed particle can easily be produced by use of a core particle emulsion containing a (meth)acrylic copolymer having an acid value of 200 to 400 mgKOH/g, the core particle emulsion obtained in the manner as described above.

The highly alkali-swellable core particle containing a (meth)acrylic copolymer having an acid value of 200 to 400 mgKOH/g can easily be obtained as a core particle emulsion by copolymerizing a monomer mixture containing: an aliphatic alkyl (meth) acrylate (a1) whose alkyl group has a number of carbon atoms of 3 or less; a carboxy group-containing monomer (a2); and a monomer (a3) having a total number of carbon atoms of 8 to 17. In the present invention, the monomer (a3) having a total number of carbon atoms of 8 to 17 for use in the above-described copolymerization is the compound represented by the following formula. Further, it is preferable that the constitution of the monomer mixture for use in preparing the core particle contains the monomer (a3) in a range of 30 parts by mass or less when the total amount of the monomers (a1) to (a3) is assumed to be 100 parts by mass. Moreover, an embodiment in which the monomer mixture for use in preparing of the core particle further contains a crosslinkable monomer in addition to the above-described constitution is also a preferred embodiment.

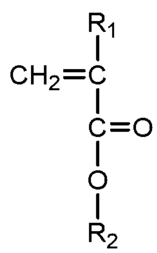

(in the formula above, $R_1$ represents a hydrogen atom or a methyl group, and $R_2$ represents a benzene ring- or aliphatic ring-containing group having a number of carbon atoms of 4 to 13.)

More specifically, the highly alkali-swellable core portion that is suitable for the present invention and that constitutes the seed particle having large particle diameters can easily be produced by using a core particle emulsion obtained in the manner as described below. The core particle emulsion can be obtained by, for example, subjecting a copolymerizable monomer mixture to emulsion polymerization, and in the copolymerizable monomer mixture, an aliphatic alkyl (meth) acrylate (a1) whose alkyl group has a number of carbon atoms of 3 or less and a carboxy group-containing monomer (a2) are blended so that the total amount may be 70 to 98% by mass, and a monomer (a3) to be used together with these copolymerizable monomers, the monomer (a3) having a total number of carbon atoms of 8 to 17, is blended to these copolymerizable monomers so that the (a3) may be 2 to 30% by mass. In obtaining the core particle emulsion, it is preferable to use a relatively highly hydrophilic aliphatic alkyl (meth)acrylate whose alkyl group has a number of carbon atoms of 2 or less as the aliphatic alkyl (meth)acrylate (a1) being the main component. Further, a monomer having a high copolymerizability with the monomer (a1) and having a total number of carbon atoms of 8 to 17 may be used as the monomer (a3) that is used together with the monomer (a1), wherein the monomer (a3) is a copolymerizable (meth) acrylate-based monomer as described above. By constituting the monomer mixture as described above, the effect of the characteristics of aqueous gel of the core particle obtained can be enhanced more, and further, the effect of reducing polymerization leftovers produced during polymerization is remarkable and such constitution is effective for mass production.

As described above, basically, the core particle emulsion for use in the present invention can easily be obtained by designing the monomer mixture for use in emulsion polymerization as follows. The core particle emulsion is easily obtained using a monomer mixture containing a relatively highly hydrophilic short-chain aliphatic alkyl (meth)acrylate (a1), a copolymerizable carboxy group-containing monomer (a2), and a relatively highly hydrophobic monomer (a3) having a total number of carbon atoms of 8 to 17, the monomer mixture containing the monomer (a3) in a range of 30% by mass or less when the total amount of the monomers (a1) to (a3) is assumed to be 100 parts by mass and copolymerizing the monomer mixture. Herein after, description will be made on the respective components etc.

Examples of the suitable aliphatic alkyl (meth)acrylate (a1) include aliphatic alkyl (meth)acrylates whose alkyl group is short, as short as a number of carbon atoms of 3 or less, or further, 2 or less. Specific examples thereof include methyl (meth) acrylate, ethyl (meth)acrylate, n-propyl (meth)acrylate, and isopropyl (meth)acrylate. According to studies conducted by the present inventors, it is preferable to use an aliphatic alkyl (meth) acrylate whose alkyl group has a number of carbon atoms of 2 or less.

Examples of the carboxy group-containing monomer (a2) include acrylic acid, an acrylic acid dimer, methacrylic acid, and monomers obtained by reacting a hydroxy alkyl (meth)acrylate such as 2-hydroxyethyl (meth)acrylate or 4-hydroxybutyl (meth)acrylate with maleic anhydride, succinic anhydride, or phthalic anhydride. Among them, it is preferable to use general purpose acrylic acid or methacrylic acid. The amount of the carboxy group-containing monomer (a2) to be used may be blended so that the acid value of the copolymer obtained may be 200 to 400 mgKOH/g, and more preferably about 200 to about 300 mgKOH/g.

The production method according to the present invention has a feature that a copolymer is obtained to prepare a core particle emulsion using monomers (a1) and (a2), and further, together with the monomers (a1) and (a2), the relatively highly hydrophobic monomer (a3) having a high copolymerizability with these monomers (a1) and (a2). As the monomer (a3), a copolymerizable monomer having a total number of carbon atoms of 8 to 17 is used, which is the copolymerizable (meth)acrylate-based monomer (a3)as described above. It is preferable to use a copolymerizable monomer having an alicyclic ring among the cyclic monomers. The present inventors have found that the effect of the characteristics of aqueous gel of the core particle obtained can be enhanced more, further, the effect of reducing polymerization leftovers produced during polymerization is remarkable, and such constitution is effective for mass production by using the monomer mixture containing the monomer (a3) together with the monomers (a1) and (a2), and have completed the present invention based on such findings.

As described above, the copolymerizable monomer represented by the following formula is the monomer (a3) for use in the present invention having a total number of carbon atoms of 8 to 17.

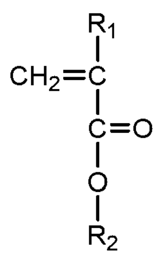

(in the formula, $R_1$ represents a hydrogen atom or a methyl group, and $R_2$ represents a benzene ring- or aliphatic ring-containing group having a number of carbon atoms of 4 to 13.)

Examples of the monomer represented by the formula above include the following monomers. Specific examples thereof include: tetrahydrofurfuryl (meth)acrylate, cyclohexyl (meth)acrylate, 3,3,5-trimethylcyclohexyl (meth)acrylate, cyclodecyl (meth)acrylate, cyclodecylmethyl (meth)acrylate, benzyl (meth)acrylate, phenyl (meth)acrylate, phenoxyethyl (meth)acrylate, and isobornyl (meth)acrylate. Further, cyclohexyl methacrylate (CHMA) in particular is preferable.

According to studies conducted by the present inventors, the seed particle exhibiting a high alkali swelling ratio, as high as 200% or more, or further, 400% or more can be obtained by copolymerizing the monomer mixture containing the monomer (a3) in a range of 30% by mass or less when the total amount of the monomers (a1) to (a3) is assumed to be 100 parts by mass. By using such a seed particle, the emulsion according to the present invention excellent in stability against separation and sedimentation can be provided in spite of the large particle size that has never conventionally been obtained, as large as an average particle diameter of 1000 nm or larger and 5000 nm or smaller. Specifically, the seed particle having a core-shell structure in which a core portion to be aqueous gel having large particle diameters by encapsulating a solvent is covered by a non-alkali-swellable shell layer, the core-shell structure retaining a particle form while having a high alkali swelling ratio, can easily be obtained by subjecting a favorable core particle emulsion having a uniform particle diameter and obtained by subjecting the monomer mixture to emulsion polymerization further to emulsion polymerization adding a hydrophobic monomer to the core particle emulsion. Moreover, the seed particle can stably be produced in an industrially efficient manner because the seed particle exhibits favorable polymerization stability during these copolymerization processes.

The present inventors consider as follows with respect to the reason that the core particle emulsion that is essential for obtaining the emulsion according to the present invention having an average particle diameter of 1000 nm or larger and 5000 nm or smaller. Any of core particles 7 to 9 for Comparative Examples described later is obtained by copolymerizing an aliphatic alkyl (meth) acrylate (a1) and a carboxy group-containing monomer (a2) in a combination such that the acid value is about 250 mgKOH/g as specified in the present invention, however, as shown in Table 4 given later, the particle obtained has a low alkali swelling ratio, as low as less than 200%, or further, 100% or less. Moreover, in the case where an emulsion is obtained in the same manner as in the production method according to the present invention using the particle for the core portion of the seed particle, the emulsion cannot be made favorable because the emulsion has a thick resin portion and is inferior in stability against separation and sedimentation even though the average particle diameter can be made 1000 nm or larger as shown in Table 6 given later. On the other hand, in Examples according to the present invention, it has been found that a seed particle having an alkali swelling ratio of 200% or more, or further, 400% or more can be obtained by blending an alicyclic or aromatic alkyl (meth) acrylate as a monomer (a3) having a total number of carbon atoms of 8 to 17 as shown in Table 3 given later. From what has described above, the present inventors consider that a higher alkali swelling ratio as described above can be realized in the present invention by incorporating the aliphatic ring or aromatic ring appropriately in the structure in addition to imparting appropriate hydrophilicity by increasing the acid value of the (meth) acrylate-based copolymer.

It is also effective that the monomer mixture further contains a crosslinkable monomer in producing a particular core particle for use in the present invention. Specific examples of the crosslinkable monomer include trimethylolpropane trimethacrylate, divinylbenzene, diallyl phthalate, allyl (meth)acrylate, and ethylene glycol di(meth)acrylate. An effect of improving the alkali swellability is obtained by using these crosslinkable monomers. Further, use of a chain transfer agent such as n-dodecyl mercaptan, t-dodecyl mercaptan, n-octyl mercaptan, or t-octyl mercaptan is also effective from the viewpoint of adjusting the alkali swellability.

The aqueous gel (hereinafter, referred to as core particle) to be the core portion can be obtained through conventionally known emulsion polymerization. Examples of specific emulsion polymerization method include the methods as described below, and any of the methods can be utilized in the present invention. Examples thereof include: a method in which a monomer mixture that constitutes the aqueous gel is placed in a reaction container simultaneously with at least water, an emulsifying agent, and a polymerization initiator to conduct emulsion polymerization; a method in which emulsion polymerization is conducted while dropping the above-described monomer mixture into a reaction mixture where at least water, an emulsifying agent, and a polymerization initiator are placed; a method in which emulsion polymerization is conducted dropping an emulsified product obtained in advance by emulsifying a monomer mixture with water and a surface active agent into a reaction container where a water and, if necessary, a surface active agent or a polymerization initiator are placed; and a method in combination of these methods.

As the polymerization initiator for use in the above-described emulsion polymerization, a radical polymerization initiator is used. Examples of the radical polymerization initiator include aqueous polymerization initiators such as ammonium persulfate, sodium persulfate, potassium persulfate, hydrogen peroxide, and azo-based compounds including 4,4'-azobis-4-cyano valeric acid, and oil-based radical initiators such as t-butyl hydroperoxide, and cumene hydroperoxide. It is preferable that the amount of these polymerization initiators used is 0.01 to 1.0 part by mass per 100 parts by mass of the unsaturated monomers that constitute the acrylic resin. The polymerization initiator can be used in each stage of polymerization, and polymerization reaction can be conducted adding the polymerization initiator in a predetermined amount in each stage. Moreover, a reducing agent can also be used in combination with the polymerization initiator.

Furthermore, it is effective to use an emulsifying agent in the above-described emulsion polymerization because polymerization leftovers produced during polymerization can be reduced. With respect to the emulsifying agent to be used, it is preferable to use the emulsifying agent in an amount within a range from 0.1 to 5 parts by mass in terms of the emulsifying agent itself relative to 100 parts by mass of the monomer mixture that constitutes the core particle. It is not preferable that the amount of the emulsifying agent used is less than 0.1 parts by mass in terms of the emulsifying agent itself because there is a tendency that an effect of addition is not obtained sufficiently, and on the other hand, it is not preferable that the amount used exceeds 5 parts by mass in terms of the emulsifying agent itself because there is a tendency that the characteristics of the coating film of the aqueous gel-encapsulating resin particle emulsion finally obtained are not sufficient.

As the emulsifying agent, it is preferable to use an emulsifying agent, for example, represented by the following formula. According to studies conducted by the present inventors, use of the emulsifying agent brings about an effect that the intended particle diameter of a particle can stably be adjusted.

$$R\text{-}O\text{-}(CH_2CH_2O)_n\text{-}SO_3M$$

(in the formula above, n is a number of 1 or more and less than 5, M represents any one of a metal ion, an ammonium ion, and an amine ion, and R represents an alkyl group or polycyclic phenyl group having a number of carbon atoms of 8 or more and less than 20.)

It is preferable that the weight average molecular weight of the core particle (aqueous gel) obtained in the manner as described above is 300000 or higher. In addition, the upper limit value is not particularly limited as long as the production is possible, however it is more preferable that the weight average molecular weight is about 400000 to about 600000.

(Shell Layer)

The core particle (aqueous gel) that forms a central layer of the seed particle obtained in the manner as described above is a highly alkali-swellable resin having a characteristic that it absorbs water under an alkaline condition to swell. When a shell layer having a non-alkali-swellable outermost layer containing a hydrophobic resin is formed on the surface of the core particle, a seed particle that enables the production of the emulsion particle according to the present invention and that is an aqueous gel-encapsulating resin particle having a core-shell structure can be obtained. The shell layer may be a layer configured of a single layer, or may be a layer including two layers of an intermediate layer and an outermost layer. In the case of the two layers, the intermediate layer can be a layer formed using a monomer containing a hydrophilic monomer so as to have hydrophilicity to some extent to make the emulsion particle according to the present invention such that the thickness of the resin portion is thin and the emulsion particle is more favorable and stable. In addition, the thickness of the resin portion as specified in the present invention means the thickness of the resin portion configured of: the outermost layer containing the hydrophobic resin of the shell layer of the seed particle; and the resin layer to be the outermost layer of the emulsion particle in the case where a resin layer to be the outermost layer of the emulsion particle according to the present invention is further stacked on the surface of the shell layer configured of a single layer or two layers. This will be described later.

The monomer that constitutes the resin layer being the shell layer is not particularly limited, any of copolymerizable monomers can be used, and components for use in forming the core portion of the seed particle can also be used. However, it is necessary that the seed particle retain a particle form after the seed particle is swollen with an alkali, and therefore it is necessary that the outermost layer that constitutes the shell layer have a non-alkali-swellable composition. Specific examples of the hydrophobic monomer for use in forming the outermost layer of the shell layer include aliphatic alkyl (meth)acrylates such as methyl (meth) acrylate and butyl (meth) acrylate, and aromatic monomers such as styrene. Among them, it is preferable to use styrene.

In the case where a particle having a core-shell structure having a shell layer configured of an intermediate layer and an outermost layer is used as the seed particle, it is preferable that the intermediate layer is obtained through polymerization using a monomer having a lower hydrophilicity than that of the core portion and thereafter the outermost layer is obtained through polymerization using a hydrophobic monomer as listed above, the hydrophobic monomer having a lower hydrophilicity than that of the intermediate layer. By constituting the shell layer as described above, the shell layer becomes more excellent in water resistance to have a higher strength, and therefore the seed particle becomes more stable and favorable in that the seed particle is not broken when the aqueous gel in the core portion at the center of the particle is swollen with water or the seed particle does not crush and can maintain a hollow structure when the swollen aqueous gel is dried.

It is preferable that the shell layer of the seed particle obtained by polymerizing a monomer as described above

has a Tg (glass transition temperature) of 50°C or higher. In the case where the seed particle having a core-shell structure having a two-layered shell layer is prepared, it is preferable to use a material having a Tg of 50°C or higher as a component of the composition for constituting the outer most layer. A material having a Tg of 70°C or higher is more preferable. By constituting the Tg of the composition of the shell layer as described above, the aqueous gel-encapsulating resin particle does not crush, can maintain a hollow structure, and can keep a sufficient particle diameter even after the aqueous gel that forms the core portion at the center of the particle is dried.

The shell layer can be obtained through polymerization using a conventionally known polymerization method to make an emulsion having a core-shell structure. For example, aqueous gel that forms the core portion at the center of the particle is obtained in advance through emulsion polymerization, and thereafter a monomer mixture for forming a shell layer may be subjected to emulsion polymerization using the polymerized product or the shell layer may be produced as an emulsion having a core-shell structure through a series of polymerization reaction. In addition, when the shell layer is formed, the aqueous gel that constitutes the core portion may be used in a state where it has been swollen with water, or the aqueous gel may be swollen under alkalinity after the emulsion having a core-shell structure is formed.

In the emulsion polymerization for obtaining the shell layer, it is preferable to use an emulsifying agent in the same manner as in the case of the emulsion polymerization for obtaining the aqueous gel. As the emulsifying agent, the same emulsifying agent as used in obtaining the aqueous gel can be used.

(Characteristics of Seed Particle)

It is preferable that the seed particle being the alkali-swellable aqueous gel-encapsulating resin particle that is for use in producing the emulsion according to the present invention, that is simply obtained in the manner as described above, and that has a core-shell structure has an average particle diameter of 500 nm or larger, or has an average particle diameter of 1000 nm or larger although the average particle diameter depends on the particle diameter of the emulsion finally desired.

Moreover, in order to obtain the emulsion according to the present invention having an average particle diameter of 1000 nm or larger and 5000 nm or smaller simply, it is required that the seed particle have an alkali swelling ratio of 200% or more, the alkali swelling ratio calculated from the above-described formula. It is more preferable to use the seed particle having an alkali swelling ratio of 400% or more. By using, as a seed particle, the aqueous gel-encapsulating resin particle having such a high alkali swelling ratio, the emulsion obtained by the production method according to the present invention has an average particle diameter of 1000 nm or larger, or 2000 nm or larger, and becomes excellent in stability against separation and sedimentation even though the emulsion has such a large particle diameter.

[Aqueous Gel-Encapsulating Resin Particle Emulsion]

The emulsion according to the present invention is easily obtained in such a way that a non-alkali-swellable resin portion is formed by stacking a resin layer to be the outermost layer of the particle on the shell layer having an outermost layer of the seed particle, the outermost layer formed with a material containing a hydrophobic monomer, or with a hydrophobic monomer using the aqueous gel-encapsulating resin particle exhibiting a high alkali swelling ratio as a seed particle. For example, the emulsion according to the present invention can easily be obtained in such a way that a mixture of: the seed particle which is obtained in the manner as described above and which has a core-shell structure; and a hydrophobic monomer is subjected to emulsion polymerization under an alkaline condition of pH of 7.0 or higher to cover the surface of the seed particle through polymerization, thereby forming a resin portion. As a result, the particle that constitutes the emulsion obtained is large, as large as an average particle diameter of 500 nm or larger, and the constitution is that, by the resin portion formed above, the aqueous gel that constitutes the core portion of the seed particle and that has a high alkali swelling ratio is encapsulated in a highly swollen state with water. In more detail, when a hydrophobic monomer is subjected to emulsion polymerization under an alkaline condition of a pH of 7.0 or higher in the presence of a large seed particle, the seed particle reaches a swollen state, and when the hydrophobic monomer is polymerized at the surface of the shell layer containing a hydrophobic resin that constitutes the seed particle, the seed particle that is swollen with water is covered through polymerization, and thus the emulsion according to the present invention is easily obtained. The emulsion polymerization can be conducted by a conventionally known emulsion polymerization method as long as the emulsion polymerization is conducted under an alkaline condition of a pH of 7.0 or higher, which is the same as the emulsion polymerization used in producing the seed particle.

As a material used for forming the resin portion that covers the seed particle, hydrophobic monomers etc. used for forming the outermost layer of the shell layer of the seed particle can be used. The resin portion is integrated with the outermost layer of the shell layer that constitutes the seed particle to form a non-alkali-swellable outermost layer of the particle that constitutes the emulsion according to the present invention and that is formed using a hydrophobic monomer. Therefore, it is preferable that 25% or more of the composition of components of the material for forming the

resin portion in order to improve the integrity is in common with the composition of the components that constitute the outermost layer of the shell layer of the seed particle. It is more preferable that 50% or more of the composition of components of the material for forming the resin portion is in common with the composition of components that constitute the outermost layer of the shell layer or the composition of components of the material for forming the resin portion is the same with the composition of components that constitute the outermost layer of the shell layer.

The emulsion according to the present invention may have one or more holes at the surface of the particle. That is to say, the present invention also relates to a technique that provides an aqueous gel-encapsulating resin particle emulsion containing a particle in which the core portion containing aqueous gel encapsulating a solvent is encapsulated by a resin portion, the particle having an average particle diameter of 1000 nm or larger and 5000 nm or smaller, having one or more holes at the surface thereof, and having a ratio of the maximum opening diameter of the hole existing at the surface of the particle to the diameter of the particle of 10% or less. It is considered that the holes are produced when the core portion encapsulates the solvent to become aqueous gel, and the number and size of the holes become different depending on the swelling ratio and size of the particle. It is anticipated that there is a case where it is preferable that holes are made larger or the number of holes are made larger depending on the application. However, it is required that the ratio of the maximum opening diameter of holes existing at the surface of the particle to the diameter of the particle be 10% or less. According to studies conducted by the present inventors, when the ratio exceeds 10%, there is a tendency that the stability of the aqueous gel-encapsulating resin particle becomes worse.

## Examples

Hereinafter, the present invention will be described more specifically giving Production Examples, Examples, and Comparative Examples. It is to be noted that the "parts" in the description are on a mass basis.

Moreover, three kinds of surface active agents described below were used as an emulsifying agent in Examples and Comparative Examples given below.

Emulsifying agent A: sodium polyoxyethylene polycyclic phenyl ether sulfate (number of moles of EO chains added of 4, number of carbon atoms of polycyclic phenyl group of 15)

Emulsifying agent B: sodium polyoxyethylene alkyl ether sulfate (number of moles of EO chains added of 18, number of carbon atoms of alkyl group of 12)

Emulsifying agent C: sodium alkylbenzene sulfonate (number of EO chains added of 0, number of carbon atoms of alkyl group of 12)

[Production Example 1: Preparation of Core Portion (Core Particle-1) in Seed Particle for Example]

First of all, 45 parts of methyl methacrylate (MMA), 10 parts of cyclohexyl acrylate (CHA) and 45 parts of methacrylic acid (m-AAc) were mixed with 150 parts of water and 0.5 parts of a sodium polyoxyethylene polycyclic phenyl ether sulfate (emulsifying agent A) by stirring to prepare an emulsified monomer mixture. A core particle emulsion was prepared using the resultant emulsified monomer mixture in the manner as described below.

In a 1 L four-necked round bottom flask equipped with a stirrer, a thermometer, and a reflux condenser, 247 parts of water were placed, and the temperature was raised to 80°C while the air inside was replaced with nitrogen under stirring. Then, 0.1 parts of potassium persulfate were added as a polymerization initiator thereto and dissolved while keeping the internal temperature at 80°C, and after dissolving the potassium persulfate, 2% of the total amount of the emulsified monomer mixture prepared in advance were placed in the 1 L four-necked round bottom flask to conduct polymerization for 30 minutes. Thereafter, the rest of the emulsified monomer mixture was dropped thereto over 2 hours to conduct reaction. After completion of the dropping of the emulsified monomer mixture, the reaction mixture was left to stand for about 2 hours, and thereafter filtration was conducted for the purpose of removing aggregates to obtain a core particle emulsion having an average particle diameter $\phi$ of about 640 nm and having an evaporation residue of about 20%. The acid value of the particle calculated from the monomer composition was 292 mgKOH/g. Moreover, the polymerization stability was evaluated according to the criteria as will be described later by observing the existence or not of the aggregates produced during polymerization, however aggregates were hardly found even on the filter cloth used for the filtration to say nothing of the inside of the reaction container. The core particle emulsion for Example is referred to as "core particle-1".

<Evaluation>

(Polymerization Stability)

The polymerization stability in reacting the emulsified monomer mixture to synthesize the emulsion was evaluated according to the criteria described below by the state of adhesion of the aggregates to the reaction container and impeller, and the state of the aggregates clogged in the filtering cloth during filtration.

A: almost no aggregates exist
B: slightly large amounts of aggregates exist
C: extremely large amounts of aggregates exist

(Measurement of Average Particle Diameter $\phi$)

The average particle diameter $\phi$ is a value measured with a particle diameter analyzer (FPAR-1000 (trade name), manufactured by Otsuka Electronics Co., Ltd.). The apparatus measures a particle diameter by directly observing scattering light from particles of the core particle emulsion obtained above using dynamic light scattering.

(Acid Value)

The acid value was calculated from the monomer composition to determine the acid value for the copolymer constituting the core portion.

[Production Examples 2 to 6: Preparation of Core portions (Core Particles-2 to 6) in Seed Particles for Examples]

Core particle emulsions were prepared by the same operations as in the preparation of core particle-1 except that the compositions of the monomer mixture, etc. used in Production Example 1 were changed as shown in Table 1. The EA used in Production Examples 3 to 5 is abbreviation for ethyl acrylate, the TMP used in Production Examples 2 to 6 is abbreviation for trimethylolpropane trimethacrylate. Moreover, emulsifying agent B used in Production Example 5 is a sodium polyoxyethylene alkyl ether sulfate. n-dodecyl mercaptan used in Production Example 3, etc. is a chain transfer agent. The core particle emulsions for Examples were denoted as core particle-2 to core particle-6. Evaluation of the polymerization stability, measurement of the average particle diameter $\phi$, and calculation of the acid value were also conducted for prepared core particle-2 to core particle-6 in the same manner as for core particle-1. The obtained results are shown altogether in Table 1. The results for core particle-1 are also shown in Table 1.

Table 1: Compositions, physical properties, etc. of core particle-1 to core particle-6 for Examples

| Production Example | | | 1 | 2 | 3 | 4 | 5 | 6 |
|---|---|---|---|---|---|---|---|---|
| Core particle No. | | | -1 | -2 | -3 | -4 | -5 | -6 |
| Monomer mixture | (a1) | MMA | 45 | 60 | 35 | - | - | - |
| | | EA | - | - | - | 40 | 40 | 50 |
| | (a2) | m-AAc | 45 | 35 | 55 | 40 | 45 | 45 |
| | (a3) | CHA | 10 | - | - | - | - | - |
| | | BZA | - | 5 | - | - | - | - |
| | | CHMA | - | - | 10 | 20 | 15 | 5 |
| | | TMP | - | 1.0 | 1.0 | 0.5 | 0.5 | 0.5 |
| n-Dodecyl mercaptan | | | - | - | 0.5 | - | 1 | 0.05 |
| Emulsifying agent A | | | 0.5 | 0.5 | 0.5 | 0.5 | — | 0.5 |
| Emulsifying agent B | | | - | - | - | - | 1.0 | - |
| Polymerization stability (filtration state) | | | A | A | A | A | A | A |
| Average particle diameter ϕ (nm) | | | 640 | 965 | 620 | 505 | 280 | 660 |
| Acid value (mgKOH/g) | | | 292 | 225 | 351 | 258 | 286 | 290 |

MMA: methyl methacrylate, EA: ethyl acrylate, m-AAc: methacrylic acid

CHA: cyclohexyl acrylate, BZA: benzyl acrylate

CHMA: cyclohexyl methacrylate, TMP: trimethylolpropane trimethacrylate

[Production Examples 7 to 12: Preparation of Core Portions (Core Particles-7 to 12) in Seed Particles for Comparison]

Core particle emulsions for comparison were prepared by the same operations as in the preparation of core particle-1 except that the compositions of the monomer mixture, etc. used in Production Example 1 were changed as shown in Table 2. Core particle emulsions obtained were denoted as core particle-7 to core particle-12. It is to be noted that, in Table 2, the MA is abbreviation for methyl acrylate, and the BA is abbreviation for butyl acrylate. Evaluation of the polymerization stability, measurement of the average particle diameter $\phi$, and calculation of the acid value were also conducted for prepared core particle-7 to core particle-12 in the same manner as for core particle-1. The obtained results are shown altogether in Table 2.

As shown in Table 2, it was found from Production Examples 8 and 9 that even though the core particle was formed using MMA, EA, or MA being an aliphatic alkyl (meth)acrylate, and m-AAc being a carboxy group-containing monomer in the same manner as in Examples, the polymerization stability was poor in the case where CHMA being an alkyl (meth)acrylate as a cyclic monomer was not blended. Moreover, it was confirmed from Production Example 11 that when the amount of the (a3) blended was excessively large assuming that the total amount of the aliphatic alkyl (meth) acrylate (a1), the carboxy group-containing monomer (a2), and the alicyclic alkyl (meth)acrylate (a3) was 100 parts by mass, the polymerization stability became lowered and a favorable core particle was not able to be formed even though CHMA being an alicyclic alkyl (meth) acrylate was blended. Moreover, it was confirmed from Production Example 12 that when the acid value of the copolymer constituting the core particle became excessively high, the polymerization stability also became poor and a favorable core particle was not able to be formed. Furthermore, Production Example 10 is an example where the acid value of the copolymer that constitutes the core particle is low, and in this case, as will be described later, it was found that even though the core particle formed had a large average particle diameter, the stability against separation and sedimentation was poor in the case where the emulsion was produced using the seed particle encapsulating the obtained core particle because the core particle formed had a low swelling ratio.

Table 2: Compositions, physical properties, etc. of core particle-7 to core particle-12 for Comparative Examples

| | | | 7 | 8 | 9 | 10 | 11 | 12 |
|---|---|---|---|---|---|---|---|---|
| Production Example | | | 7 | 8 | 9 | 10 | 11 | 12 |
| Core particle No. | | | -7 | -8 | -9 | -10 | -11 | -12 |
| Monomer mixture | (a1) | MMA | - | 55 | - | - | - | - |
| | | EA | - | - | 60 | 65 | 25 | 20 |
| | | MA | - | 5 | - | - | - | - |
| | | BA | 60 | - | - | - | - | - |
| | (a2) | m-AAc | 40 | 40 | 40 | 15 | 40 | 75 |
| | (a3) | CHMA | - | - | - | 20 | 35 | 5 |
| | | TMP | 0.5 | 0.5 | - | 0.5 | 0.5 | 1 |
| n-Dodecyl mercaptan | | | - | - | 5 | - | - | - |
| Emulsifying agent A | | | - | - | 0.5 | 0.5 | 0.5 | 0.5 |
| Emulsifying agent B | | | 1 | 1 | - | - | - | - |
| Polymerization stability | | | A | C | B | A | C | C |
| (Filtration state) | | | | Large amounts of leftovers | Leftovers existed | | Large amounts of leftovers | Large amounts of leftovers |
| Average particle diameter ϕ (nm) | | | 240 | - | 350 | 650 | - | - |
| Acid value (mgKOH/g) | | | 257 | 257 | 247 | 97 | 258 | 481 |

MMA: methyl methacrylate, EA: ethyl acrylate, MA: methyl acrylate
BA: butyl acrylate, m-AAc: methacrylic acid, CHMA: cyclohexyl methacrylate
TMP: trimethylolpropane trimethacrylate

[Production Example 13: Preparation of Seed Particle Emulsion (Seed Particle-1) for Use in Example Having Core-Shell Structure]

An alkali-swellable seed particle emulsion was prepared using alkali-swellable core particle-1 prepared previously in Production Example 1 in the same manner as described below. The alkali seed particle emulsion contains the core particle covered by a non-alkali-swellable shell layer, retains a particle form while having a high alkali swelling ratio, and has a core-shell structure. Specifically, the shell layer is configured of two layers of an intermediate layer the hydrophilicity of which is lower than that of the core portion, and a non-alkali-swellable outermost layer of the seed particle, the outermost layer formed using a hydrophobic monomer.

(Formation of Shell Layer of Seed Particle)

First of all, 35 parts of methyl methacrylate (MMA), 5 parts of butyl methacrylate (BMA), 8 parts of butyl acrylate (BA), and 2 parts of methacrylic acid were mixed with 50 parts of water and 0.5 parts of a sodium polyoxyethylene alkyl ether sulfate (emulsifying agent B) by stirring to prepare an emulsified monomer mixture for synthesizing shell layer 1 being an intermediate layer. Hereinafter, the emulsified monomer mixture is referred to as emulsified monomer mixture for shell 1. Moreover, 50 parts of styrene (ST) were mixed with 50 parts of water and 0.5 parts of a sodium polyoxyethylene alkyl ether sulfate (emulsifying agent B) by stirring to prepare an emulsified monomer mixture for synthesizing shell layer 2 being an outermost layer formed using a hydrophobic monomer. Hereinafter, the emulsified monomer mixture is referred to as emulsified monomer mixture for shell 2.

A seed particle emulsion for use in Example having a core-shell structure was prepared by the method described below using the alkali-swellable core particle-1 prepared previously in Production Example 1 and the two kinds of the emulsified monomer mixtures prepared above. First of all, in a 2 L four-necked round bottom flask equipped with a stirrer, a thermometer, and a reflux condenser, 900 parts by mass of water and 20 parts of core particle-1 in terms of the solid content were placed, and the temperature was raised to 85°C while the air inside was replaced with nitrogen under stirring. Then, 0.5 parts of potassium persulfate were added as a polymerization initiator thereto and dissolved while keeping the internal temperature at 85°C, and after dissolving the potassium persulfate, the emulsified monomer mixture for shell 1 previously prepared in advance was dropped and reacted over about one hour to form an intermediate layer of the seed particle. Subsequently after the completion of the addition of the emulsified monomer mixture for shell 1, the emulsified monomer mixture for shell 2 previously prepared in advance was dropped and reacted over about 1 hour to form the outermost layer of the seed particle.

(Swelling Treatment with Alkali)

Further, after the completion of the addition, swelling treatment with an alkali was conducted. In the swelling treatment with an alkali, 8 parts of 25% ammonia water were added to the round bottom flask to make the pH 7.0 or higher, and the resultant mixture was left to stand at an internal temperature of 90°C for about 2 hours. Thereafter, filtration was conducted for the purpose of removing aggregates, and the polymerization stability was evaluated according to the previously described criteria by observing the existence or not of the aggregates produced during polymerization. As a result, aggregates were hardly found even on the filter cloth used for the filtration to say nothing of the inside of the reaction container. Moreover, the average particle diameter before and after swelling treatment with an alkali was measured. The average particle diameter was given as an average value of particle diameters of 10 particles, the particle diameters each measured from an image of a particle (SEM image) taken with a scanning electron microscope (JSM-6510 (trade name) manufactured by JEOL, Ltd.). As a result, an alkali-swellable seed particle emulsion having: an average particle diameter before swelling treatment with an alkali (referred to as particle diameter before treatment) of 970 nm; an average particle diameter after swelling treatment with an alkali (referred to as particle diameter after treatment) of 1720 nm; an alkali swelling ratio of 458 (%); and an evaporation residue of about 10% was prepared. The particle after swollen with an alkali is referred to as "seed particle-1". The alkali swelling ratio was a value calculated from the following formula.

$$\text{Alkali swelling ratio (\%)} = \{(\text{Average particle diameter after particle is swollen with alkali})^3/(\text{average particle diameter before particle is swollen with alkali})^3 - 1\} \times 100$$

[Production Examples 14 to 18: Preparation of Seed Particle Emulsions (Seed Particles-2 to 6) for Use in Examples Having Core-Shell Structure]

Seed partcles-2 to 6 each being a seed particle emulsion for use in Examples having a core-shell structure were prepared by conducting the same operations as in the preparation of seed particle-1 except that the core particle and the composition of the emulsified monomer mixture used for forming the shell layer were changed as shown in Table 3. A sodium alkylbenzene sulfonate was used as emulsifying agent C in the emulsified monomer mixture for synthesizing shell layer 2 used in preparing seed particle-6. The polymerization stability during preparation was evaluated, and the alkali swelling ratio for the seed particles obtained were calculated in the same manner as in the case of seed particle-1. The compositions used in preparing seed particles-2 to 6 and the evaluation results are shown in Table 3. In Table 3, the compositions and the evaluation results for seed particle-1 are shown together.

Table 3: Compositions, physical properties, etc. of seed particle-1 to seed particle-6 for Examples

| Production Example | | 13 | 14 | 15 |
|---|---|---|---|---|
| Seed particle No. | | -1 | -2 | -3 |
| Core particles | Core particle-1 | 20 | - | - |
| | Core particle-2 | - | 20 | - |
| | Core particle-3 | - | - | 20 |
| | Core particle-4 | - | - | - |
| | Core particle-5 | - | - | - |
| | Core particle-6 | - | - | - |
| Composition of shell 1 | MMA | 35 | 35 | 35 |
| | BMA | 5 | 5 | 5 |
| | BA | 8 | 8 | 8 |
| | m-AAc | 2 | 2 | 2 |
| | Emulsifying agent A | - | - | - |
| | Emulsifying agent B | 0.5 | 0.5 | 0.5 |
| Composition of shell 2 | ST | 50 | 50 | 50 |
| | Emulsifying agent A | - | - | - |
| | Emulsifying agent B | 0.5 | 0.5 | 0.5 |
| | Emulsifying agent C | - | - | - |
| Swelling treatment | Particle diameter before treatment (nm) | 970 | 1230 | 860 |
| | Particle diameter after treatment (nm) | 1720 | 2210 | 1430 |
| Alkali swelling ratio (%) | | 458 | 480 | 360 |
| Polymerization stability (filtration state) | | A | A | A |

MMA: methyl methacrylate, BMA: butyl methacrylate, BA: butyl acrylate
m-AAc: methacrylic acid, ST: styrene

Table 3 (cont'd): Compositions, physical properties, etc. of seed particle-1 to seed particle-6 for Examples

| Production Example | | 16 | 17 | 18 |
|---|---|---|---|---|
| Seed particle No. | | -4 | -5 | -6 |
| Core particles | Core particle-1 | - | - | - |
| | Core particle-2 | - | - | - |
| | Core particle-3 | - | - | - |
| | Core particle-4 | 20 | - | - |
| | Core particle-5 | - | 20 | - |
| | Core particle-6 | - | - | 10 |
| Composition of shell 1 | MMA | 35 | 35 | 35 |
| | BMA | 5 | 5 | 5 |
| | BA | 8 | 8 | 8 |
| | m-AAc | 2 | 2 | 2 |
| | Emulsifying agent A | - | - | - |
| | Emulsifying agent B | 0.5 | 0.5 | 0.5 |
| Composition of shell 2 | ST | 50 | 50 | 50 |
| | Emulsifying agent A | - | - | - |
| | Emulsifying agent B | 0.5 | 0.5 | - |
| | Emulsifying agent C | - | - | 0.5 |
| Swelling treatment | Particle diameter before treatment (nm) | 805 | 630 | 1030 |
| | Particle diameter after treatment (nm) | 1280 | 920 | 1540 |
| Alkali swelling ratio (%) | | 302 | 343 | 234 |
| Polymerization stability (filtration state) | | A | A | A |

MMA: methyl methacrylate, BMA: butyl methacrylate, BA: butyl acrylate
m-AAc: methacrylic acid, ST: styrene

[Production Examples 19 to 21: Preparation of Seed Particle Emulsions (Seed Particles-7 to 9) for Use in Comparative Examples Having Core-Shell Structure]

Seed particles-7 to 9 each being a seed particle emulsion for use in Comparative Examples having a core-shell structure were prepared by conducting the same operations as in the preparation of seed particle-1 except that the core particle and the compositions of the emulsified monomer mixtures used for forming the shell layers were changed as shown in Table 4. The polymerization stability during preparation was evaluated, and the alkali swelling ratio for the

seed particles obtained were calculated in the same manner as in the case of seed particle-1. The compositions used in preparing seed particles-7 to 9 and the evaluation results are shown in Table 4. It was confirmed that these seed particle emulsions had an alkali swelling ratio of less than 200% and were inferior in swellability.

Table 4: Compositions, physical properties, etc. of seed particle-7 to seed particle-9 for Comparative Examples

| Production Example | | 19 | 20 | 21 |
|---|---|---|---|---|
| Seed particle No. | | -7 | -8 | -9 |
| Core particles | Core particle-7 | 10 | - | - |
| | Core particle-9 | - | 5 | - |
| | Core particle-10 | - | - | 5 |
| Composition of shell 1 | MMA | 35 | 35 | 35 |
| | BMA | 5 | 5 | 5 |
| | BA | 8 | 8 | 8 |
| | m-AAc | 2 | 2 | 2 |
| | Emulsifying agent A | 0.5 | 0.5 | 0.5 |
| | Emulsifying agent B | - | - | - |
| Composition of shell 2 | ST | 50 | 50 | 50 |
| | Emulsifying agent A | - | - | - |
| | Emulsifying agent B | 0.5 | 0.5 | 0.5 |
| Swelling treatment | Particle diameter before treatment (nm) | 450 | 680 | 940 |
| | Particle diameter after treatment (nm) | 620 | 850 | 1120 |
| Alkali swelling ratio (%) | | 160 | 95 | 69 |
| Polymerization stability (filtration state) | | A | A | A |

MMA: methyl methacrylate, BMA: butyl methacrylate
BA: butyl acrylate, m-AAc: methacrylic acid, ST: styrene

[Example 1: Preparation of Aqueous Gel-Encapsulating Resin Particle Emulsion (Em-1)]

An emulsified monomer mixture for forming a resin layer to be the outermost layer of a particle, the outermost layer formed using a hydrophobic monomer, was prepared in advance by mixing 100 parts of styrene (ST) with 100 parts of water and 0.5 parts of a sodium polyoxyethylene alkyl ether sulfate (emulsifying agent B). According to the procedures described below, a resin layer to be the outermost layer of the particle was formed on the surface of the shell layer constituting the seed particle to obtain an aqueous gel-encapsulating resin particle emulsion configured of a highly alkali-swellable core portion and a non-alkali-swellable resin portion encapsulating the core portion.

First of all, 130 parts of water were placed in a 2L round bottom flask equipped with a stirrer, a thermometer,

and a reflux condenser, the previously prepared seed particle-1 being an alkali-swellable seed particle emulsion having an evaporation residue of about 10% were then placed therein in an amount of 100 parts in terms of the solid content, and the temperature was raised to 90°C while the air inside was replaced with nitrogen under stirring. Then, 0.5 parts of potassium persulfate were added as a polymerization initiator thereto and dissolved while keeping the internal temperature at 90°C, and after dissolving the potassium persulfate, the monomer mixture for forming a resin layer to be the outermost layer of the particle, which was prepared in advance through mixing by stirring, was dropped into the round bottom flask over about 2 hours to conduct reaction. After completion of dropping, the reaction mixture was left to stand for about 2 hours, and thereafter, the reaction mixture was cooled to room temperature to prepare an aqueous gel-encapsulating resin particle emulsion having an average particle diameter of 2050 nm and an evaporation residue of about 15%. The aqueous gel-encapsulating resin particle emulsion is referred to as "Em-1".

After completion of the reaction, filtration was conducted for the purpose of removing aggregates, and the polymerization stability was evaluated according to the previously described criteria by observing the existence or not of the aggregates produced during polymerization. As a result, aggregates were hardly found even on the filter cloth used for the filtration to say nothing of the inside of the reaction container. Moreover, the stability against separation and sedimentation was evaluated for the obtained Em-1 in the manner as described below, and as a result, it was confirmed that Em-1 had a favorable stability against separation and sedimentation without causing separation or sedimentation of particles even though Em-1 had an average particle diameter $\phi$ of 2 $\mu$m (2000 nm) or larger measured with a particle diameter analyzer. Further, the thickness of the non-alkali-swellable resin portion encapsulating the core portion constituting Em-1 was measured by the method described later using a transmission electron microscope (TEM) to find that the thickness was 70 nm. Moreover, the ratio of the resin portion in the particle diameter measured with a TEM image similar to that as described above was determined to be about 3.4%, thereby confirming that the resin portion is an extremely thin particle. In addition, the resin portion is constituted by a stacked body of: the shell layer that constitutes the seed particle having a core-shell structure; and the resin layer that is to be the outermost layer of the particle and that is stacked on the shell layer.

Figure 1 shows a TEM image with 7000 magnifications of particles that constitute the aqueous gel-encapsulating resin particle emulsion of Example 1, Figure 2 shows a TEM image with 29000 magnifications of a particle that constitutes the aqueous gel-encapsulating resin particle emulsion of Example 1. Moreover, Figure 3 shows an FE-SEM image with 30000 magnifications of the aqueous gel-encapsulating resin particle emulsion of Example 1, and Figure 4 shows an FE-SEM image with 50000 magnifications of the aqueous gel-encapsulating resin particle emulsion of Example 1. It is understood from Figures 1 and 2 that the particles that constitute the aqueous gel-encapsulating resin particle emulsion of Example 1 are large particles each having a particle diameter of 2 $\mu$m (2000 nm) or larger and that the resin portion is extremely thin, as thin as 70 nm. Moreover, as shown in Figures 3 and 4, the particle included in the aqueous gel-encapsulating resin has holes at the surface of the particle but keeps a favorably spherical shape even though the particle is a large particle having a particle diameter of 2 $\mu$m or larger.

(Evaluation of Stability against Separation and Sedimentation)

The state of separation and sedimentation was visually observed for Em-1 obtained above after the obtained Em-1 was left to stand at room temperature for 1 month, and the stability against separation and sedimentation was evaluated according to the criteria described below. The evaluation results are shown in Table 5.

A: Both separation and sedimentation are not observed
B: Separation is not observed, but sedimentation is slightly observed
C: Separation and sedimentation are much observed

(Measurement of Thickness of Resin Portion)

The thickness of the non-alkali-swellable resin portion encapsulating the core portion constituting Em-1 was measured using Tecnai G2 ($LaB_6$ thermal electron emission type, manufactured by FEI Company) being a transmission electron microscope in the manner as described below. First of all, a resin particle of powdered Em-1 was embedded in a resin to prepare an ultra-thin section having a thickness of about 200 nm as a sample for measurement. The thickness of the resin portion was then measured from a TEM image for the ultra-thin section as shown in Figure 2. Moreover, as shown in Figure 1, the particle diameter was determined from the TEM image, and the ratio (%) of the thickness of the resin portion to the measured diameter of the particle was determined. The measured values and calculated values are shown in Table 5.

[Examples 2 to 6: Preparation of Aqueous Gel-Encapsulating Resin Particle Emulsions (Em-2 to Em-6)]

Em-2 to Em-6 each being an aqueous gel-encapsulating resin particle emulsion were prepared by conducting the same operations as in the preparation of Em-1 of Example 1 except that the seed particle used was changed to seed particle-2 to seed particle-6 described in Table 5, respectively. As for Em-5, styrene (ST) and a crosslinkable monomer, trimethylolpropane trimethacrylate (TMP), were used together. The polymerization stability and stability against separation and sedimentation were evaluated, and the thickness d of the resin portion was measured also for the obtained Em-2 to Em-6 in the same manner as for Em-1. The results are shown in Table 5.

Table 5: Compositions and physical properties of aqueous gel-encapsulating resin particle emulsions Em-1 to Em-6

| | | Example 1 | Example 2 | Example 3 |
|---|---|---|---|---|
| | | Em-1 | Em-2 | Em-3 |
| Seed particles | Seed particle-1 | 100 | - | - |
| | Seed particle-2 | - | 100 | - |
| | Seed particle-3 | - | - | 150 |
| | Seed particle-4 | - | - | - |
| | Seed particle-5 | - | - | - |
| | Seed particle-6 | - | - | - |
| Resin outermost layer | ST | 100 | 100 | 100 |
| | TMP | - | - | - |
| | Emulsifying agent A | - | - | - |
| | Emulsifying agent B | 0.5 | 0.5 | 0.5 |
| Polymerization stability (Filtration state) | | A | A | A |
| Average particle diameter ϕ (nm) | | 2050 | 2450 | 1710 |
| Thickness of resin portion d (nm) | | 70 | 210 | 160 |
| d/ϕ × 100 (%) | | 3.4 | 8.6 | 9.3 |
| Stability against separation and sedimentation | | A | A | A |

ST: styrene, TMP: trimethylolpropane trimethacrylate

Table 5 (cont'd): Compositions and physical properties of aqueous gel-encapsulating resin particle emulsions Em-1 to Em-6

| | | Example 4 | Example 5 | Example 6 |
|---|---|---|---|---|
| | | Em-4 | Em-5 | Em-6 |
| Seed particles | Seed particle-1 | - | - | - |
| | Seed particle-2 | - | - | - |
| | Seed particle-3 | - | - | - |
| | Seed particle-4 | 200 | - | - |
| | Seed particle-5 | - | 250 | - |
| | Seed particle-6 | - | - | 250 |
| Resin outermost layer | ST | 100 | 70 | 100 |
| | TMP | - | 30 | - |
| | Emulsifying agent A | - | - | - |
| | Emulsifying agent B | 0.5 | 0.5 | 0.5 |
| Polymerization stability (Filtration state) | | A | A | A |
| Average particle diameter ϕ (nm) | | 1610 | 1250 | 1750 |
| Thickness of resin portion d (nm) | | 97 | 65 | 70 |
| d/ϕ × 100 (%) | | 6.0 | 5.2 | 4.0 |
| Stability against separation and sedimentation | | A | A | A |

ST: styrene, TMP: trimethylolpropane trimethacrylate

[Comparative Examples 1 to 3: Preparation of Aqueous Gel-Encapsulating Resin Particle Emulsions (Em-7 to Em-9)]

Em-7 to Em-9 each being an aqueous gel-encapsulating resin particle emulsion of Comparative Examples were prepared by conducting the same operations as in the preparation of Em-1 of Example 1 except that the seed particle used was changed to seed particle-7 to seed particle-9 described in Table 4 respectively, the seed particles having an alkali swelling ratio of less than 200% as described in Table 4 and therefore being inferior in alkali swellability. The polymerization stability and the stability against separation and sedimentation were evaluated, and the thickness of the resin portion was measured also for the obtained Em-7 to Em-9 in the same manner as for Em-1, and the results are shown in Table 6. As a result, it was confirmed that, as shown in Table 6, the particles constituting the emulsions had a thickness of the resin portion far exceeding 10% of the diameter of the particle even though the particles encapsulated aqueous gel with the non-alkali-swellable resin portion. Therefore, emulsions of Comparative Examples 1 to 3 were inferior in the stability against separation and sedimentation. Figure 5 shows a TEM image with 29000 magnifications of the resin portion of a particle that constitutes the aqueous gel-encapsulating resin particle emulsion of Comparative Example 1, and it is understood that the thickness of the resin portion is thicker as compared with the thickness in the particle of Examples according to the present invention.

Table 6: Compositions, physical properties, etc. of aqueous gel-encapsulating resin particle emulsions Em-7 to Em-9 for Comparative Examples

| | | Comparative Example 1 | Comparative Example 2 | Comparative Example 3 |
|---|---|---|---|---|
| | | Em-7 | Em-8 | Em-9 |
| Seed particles | Seed particle-7 | 50 | - | - |
| | Seed particle-8 | - | 50 | - |
| | Seed particle-9 | - | - | 50 |
| Resin outermost layer | ST | 100 | 100 | 100 |
| | Emulsifying agent A | - | 1 | 1 |
| | Emulsifying agent B | 1 | - | - |
| Polymerization stability (Filtration state) | | A | A | C<br>Insufficient filtration |
| Average particle diameter ϕ (nm) | | 820 | 1050 | 1260 |
| Thickness of resin portion d (nm) | | 100 | 350 | 430 |
| d/ϕ × 100 (%) | | 12.2 | 33.3 | 34.1 |
| Stability against separation and sedimentation | | B | C | C |

ST: styrene

## Industrial Applicability

In the particle of the emulsion provided by the present invention, the alkali swelling ratio of the encapsulated aqueous gel is extremely high, the thickness of the resin portion that encapsulates the aqueous gel to be a core is thin, and therefore an emulsion having excellent stability against separation and sedimentation and having large particle diameters of 1000 nm or larger and 5000 nm or smaller can be provided. The emulsion having excellent stability against separation and sedimentation and having large particle diameters has not conventionally been obtained, and utilization thereof to various applications is expected. Moreover, the aqueous gel-encapsulating resin particle emulsion provided by the present invention turns into a firm particle having a large vacant portion inside by drying the aqueous gel encapsulated as the core portion, and therefore development to applications in which such a property is positively utilized is also possible.

## Claims

1. An aqueous gel-encapsulating resin particle emulsion comprising a particle that comprises:

an alkali-swellable core portion comprising a (meth)acrylic copolymer having an acid value of 200 to 400 mgKOH/g; and
a resin portion encapsulating the core portion and having a non-alkali-swellable outermost layer of the particle, the non-alkali-swellable outermost layer formed using a hydrophobic monomer, wherein:

the core portion is an aqueous gel encapsulating a solvent,
the resin portion has a thickness of 10% or less of a diameter of the particle; and
the particle has an average particle diameter of 1000 nm or larger and 5000 nm or smaller;
the core portion is obtained by copolymerizing a monomer mixture comprising:

an aliphatic alkyl (meth)acrylate (a1) whose alkyl group has a number of carbon atoms of 3 or less,
a carboxy group-containing monomer (a2); and
a monomer (a3) having a total number of carbon atoms of 8 to 17 in a range of 30 parts by mass or less when the total amount of the monomers (a1) to (a3) is 100 parts by mass;

wherein the monomer (a3) having a total number of carbon atoms of 8 to 17 is a copolymerizable (meth)acrylate-based monomer represented by the following formula:

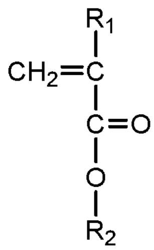

wherein $R_1$ represents a hydrogen atom or a methyl group, and $R_2$ represents a benzene ring- or aliphatic ring-containing group having a number of carbon atoms of 4 to 13.

**2.** The aqueous gel-encapsulating resin particle emulsion according to claim 1, further having one or more holes at a surface of the particle, and having a ratio of a maximum opening diameter of the holes existing at the surface of the particle to a diameter of the particle of 10% or less.

**3.** A method for producing an aqueous gel-encapsulating resin particle emulsion comprising:
using a seed particle having a core-shell structure and comprising:

an alkali swellable core portion; and
a shell layer having a non-alkali-swellable outermost layer of the seed particle, the non-alkali-swellable outermost layer formed using a hydrophobic monomer; and

wherein the seed particle is a particle obtained such that a monomer mixture comprising:

an aliphatic alkyl (meth)acrylate (a1) whose alkyl group has a number of carbon atoms of 3 or less;
a carboxy group-containing monomer (a2); and
a monomer (a3) having a total number of carbon atoms of 8 to 17 is subjected to copolymerization to obtain an alkali-swellable core particle comprising a (meth)acrylic copolymer having an acid value of 200 to 400 mgKOH/g, then a material comprising the core particle and a hydrophobic monomer is subjected to emulsion polymerization to turn the core particle into a core-shell particle in which the core particle is covered by a shell layer having a non-alkali-swellable outermost layer of the seed particle, the outermost layer formed using a hydrophobic monomer, and the core-shell particle is subjected to swelling treatment with an alkali under an alkaline condition of pH of 7.0 or higher; and
stacking a non-alkali-swellable resin layer to be an outermost layer of the particle on the shell layer with a material comprising a hydrophobic monomer to form a non-alkali-swellable resin portion, thereby producing an aqueous gel-encapsulating resin particle emulsion having an average particle diameter of particles of 1000 nm or larger and 5000 nm or smaller and having a thickness of the resin portion of 10% or less of a diameter of the particle in a state where the core portion is an aqueous gel encapsulating a solvent, wherein:

as the seed particle, a particle in which an alkali-swellable core particle comprising a (meth)acrylic copolymer having an acid value of 200 to 400 mgKOH/g is covered by the shell layer is used, the seed particle having an average particle diameter of 500 nm or larger after the particle is swollen with an alkali, having an alkali swelling ratio of 200% or more, the alkali swelling ratio determined by the following formula using the average particle diameters measured before and after the particle is swollen with the alkali;

retaining a particle form while having a high alkali swelling ratio; and
having a core-shell structure:

$$\text{Alkali swelling ratio (\%)} = \{(\text{Average particle diameter after particle is swollen with alkali})^3/(\text{average particle diameter before particle is swollen with alkali})^3 - 1\} \times 100,$$

wherein the monomer (a3) having a total number of carbon atoms of 8 to 17 is a copolymerizable (meth)acrylate-based monomer represented by the following formula:

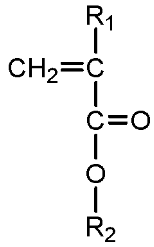

wherein $R_1$ represents a hydrogen atom or a methyl group, and $R_2$ represents a benzene ring- or aliphatic ring-containing group having a number of carbon atoms of 4 to 13, and
wherein the monomer mixture for use in preparing the core particle comprises the monomer (a3) in a range of 30 parts by mass or less when a total amount of the monomers (a1) to (a3) is 100 parts by mass.

**4.** The method for producing an aqueous gel-encapsulating resin particle emulsion according to claim 3, wherein the alkali swelling ratio is 400% or more.

**5.** The method for producing an aqueous gel-encapsulating resin particle emulsion according to claim 3 or 4, wherein the monomer mixture for use in preparing the core particle further comprises a crosslinkable monomer.

**6.** The method for producing an aqueous gel-encapsulating resin particle emulsion according to claim 3 to 5, wherein, in the emulsion polymerization, an emulsifying agent represented by the following formula is used in an amount within a range from 0.1 to 5 parts by mass in terms of the emulsifying agent itself relative to 100 parts by mass of the monomer mixture:

$$R\text{-}O\text{-}(CH_2CH_2O)_n\text{-}SO_3M$$

wherein n represents a number of 1 or more and less than 5, M represents any one of a metal ion, an ammonium ion, and an amine ion, and R represents an alkyl group or polycyclic phenyl group having a number of carbon atoms of 8 or more and less than 20.

**7.** The method for producing an aqueous gel-encapsulating resin particle emulsion according to any one of claims 3 to 6, wherein the shell layer constituting the seed particle comprises two layers of:

an intermediate layer having a hydrophilicity lower than the hydrophilicity of the core portion; and
a non-alkali-swellable outermost layer having a hydrophilicity lower than the hydrophilicity of the intermediate layer and being formed using a hydrophobic monomer.

**8.** The method for producing an aqueous gel-encapsulating resin particle emulsion according to claim 7, wherein a material comprising a hydrophobic monomer for forming the outermost layer comprises a crosslinkable monomer.

## Patentansprüche

**1.** Wässrige, Gel-verkapselnde Harzpartikel-Emulsion, umfassend einen Partikel, der folgendes umfasst:

einen alkaliquellbaren Kernanteil, umfassend ein (Meth)acryl-Copolymer mit einem Säurewert von 200 bis 400 mgKOH/g; und
einen Harzanteil, der den Kernanteil einkapselt und eine nicht-alkaliquellbare äußerste Schicht des Partikels aufweist, wobei die nicht-alkaliquellbare äußerste Schicht unter Verwendung eines hydrophoben Monomers gebildet wird, wobei
der Kernanteil ein wässriges Gel ist, das ein Lösungsmittel einkapselt,
der Harzanteil eine Dicke von 10% oder weniger des Partikeldurchmessers aufweist; und der Partikel einen durchschnittlichen Partikeldurchmesser von 1000 nm oder mehr und 5000 nm oder weniger aufweist,
wobei der Kernanteil durch Copolymerisieren einer Monomer-Mischung erhalten wird, die folgendes umfasst:

ein aliphatisches Alkyl(meth)acrylat (a1), dessen Alkylgruppe eine Anzahl an Kohlenstoffatomen von 3 oder weniger aufweist,
ein Carboxygruppen enthaltendes Monomer (a2); und
ein Monomer (a3), das eine Gesamtzahl an Kohlenstoffatomen von 8 bis 17 in einem Bereich von 30 Massenteilen oder weniger aufweist, wenn die Gesamtmenge der Monomere (a1) bis (a3) 100 Massenteile beträgt,

wobei das Monomer (a3), das eine Gesamtzahl an Kohlenstoffatomen von 8 bis 17 aufweist, ein colymerisierbares Monomer auf Basis von (Meth)acrylat ist, das durch die folgende Formel dargestellt wird:

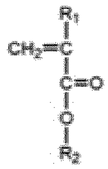

wobei $R^1$ für ein Wasserstoffatom oder eine Methylgruppe steht und $R^2$ für eine einen Benzolring oder einen aliphatischen Ring enthaltende Gruppe steht, die eine Anzahl an Kohlenstoffatomen von 4 bis 13 aufweist.

**2.** Wässrige, Gel-verkapselnde Harzpartikel-Emulsion nach Anspruch 1, die ferner ein oder mehrere Öffnungen an der Oberfläche des Partikels aufweist und ein Verhältnis des maximalen Öffnungsdurchmessers der an der Oberfläche des Partikels vorhandenen Öffnungen zu dem Durchmesser des Partikels von 10% oder weniger aufweist.

**3.** Verfahren zur Herstellung einer wässrigen, Gel-verkapselnden Harzpartikel-Emulsion, das folgendes umfasst:

Verwenden eines Keimpartikels, der eine Kern-Hülle-Struktur aufweist und folgendes umfasst:

einen alkaliquellbaren Kernanteil; und
eine Hüllschicht, die eine nicht-alkaliquellbare äußerste Schicht des Keimpartikels aufweist, wobei die nicht-alkaliquellbare äußerste Schicht unter Verwendung eines hydrophoben Monomers gebildet wird; und

wobei der Keimpartikel ein Partikel ist, der so erhalten wird, dass eine Monomer-Mischung, die folgendes umfasst:

ein aliphatisches Alkyl(meth)acrylat (a1), dessen Alkylgruppe eine Anzahl an Kohlenstoffatomen von 3 oder weniger aufweist;
ein Carboxygruppen enthaltendes Monomer (a2); und
ein Monomer (a3), das eine Gesamtzahl an Kohlenstoffatomen von 8 bis 17 aufweist, einer Copolymerisation unterzogen wird, um einen alkaliquellbaren Kernpartikel zu erhalten, der ein (Meth)acryl-Copolymer mit einem Säurewert von 200 bis 400 mgKOH/g umfasst, dann Unterziehen des Materials, das den Kernpartikel und das hydrophobe Monomer umfasst, einer Emulsionspolymerisation, um den Kernpartikel in einen Kern-Hülle-Partikel umzuwandeln, bei dem der Kernpartikel mit einer Hüllschicht bedeckt ist, die die nicht-alkaliquellbare äußerste Schicht des Keimpartikels aufweist, wobei die äußerste Schicht, die unter Verwendung des hydrophoben Monomers gebildet wurde, und der Kern-Hülle-Partikel einer Quellbehandlung mit einem Alkali, unter einer alkalischen Bedingung von pH 7,0 oder höher, unterzogen werden; und Aufschichten der nicht-alkaliquellbaren Harzschicht derart, dass sie die äußerste Schicht des Partikels auf der Hüllschicht ist, mit einem Material, das ein hydrophobes Monomer umfasst, um einen nicht-alkaliquellbaren Harzanteil

zu bilden, wodurch eine wässrige, Gel-verkapselnde Harzpartikel-Emulsion mit einem durchschnittlichen Partikeldurchmesser der Partikel von 1000 nm oder mehr und 5000 nm oder weniger und einer Dicke des Harzanteils von 10% oder weniger des Partikeldurchmessers in einem Zustand gebildet wird, in dem der Kernteil ein wässriges Gel ist, das ein Lösungsmittel einkapselt, wobei als Keimpartikel ein Partikel verwendet wird, bei dem ein alkaliquellbarer Kernpartikel, der ein (Meth)acryl-Copolymer mit einem Säurewert von 200 bis 400 mgKOH/g umfasst, von einer Hüllschicht bedeckt ist, wobei der Keimpartikel einen durchschnittlichen Partikeldurchmesser von 500 nm oder mehr aufweist, nachdem der Partikel, der ein Alkaliquellverhältnis von 200% oder mehr aufweist, mit einem Alkali gequollen wurde, wobei das Alkaliquellverhältnis durch die folgende Formel unter Verwendung der durchschnittlichen Partikeldurchmesser bestimmt wird, die vor und nach dem Quellen des Partikels mit dem Alkali gemessen wurden;
Beibehalten der Partikelform bei gleichzeitig hohem Alkaliquellverhältnis und bei einer Kern-Schale-Struktur:

Alkaliquellverhältnis (%) = {(Durchschnittlicher Partikeldurchmesser, nachdem der Partikel mit einem Alkali gequollen wurde)$^3$/(Durchschnittlicher Partikeldurchmesser, bevor der Partikel mit einem Alkali gequollen wurde)$^3$ - 1} × 100,

wobei das Monomer (a3), das eine Gesamtzahl an Kohlenstoffatomen von 8 bis 17 aufweist, ist ein copolymerisierbares Monomer auf Basis von (Meth)acrylat ist, das durch die folgende Formel dargestellt wird:

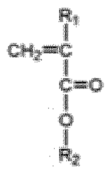

wobei $R^1$ für ein Wasserstoffatom oder eine Methylgruppe steht und $R^2$ für eine einen Benzolring oder einen aliphatischen Ring enthaltende Gruppe steht, die eine Anzahl an Kohlenstoffatomen von 4 bis 13 aufweist, und wobei die Monomer-Mischung zur Verwendung bei der Herstellung des Kernpartikels das Monomer (a3) in einem Bereich von 30 Massenteilen oder weniger umfasst, wenn die Gesamtmenge der Monomere (a1) bis (a3) 100 Massenteile beträgt.

**4.** Verfahren zur Herstellung einer wässrigen, Gel-verkapselnden Harzpartikel-Emulsion nach Anspruch 3, wobei das Alkaliquellverhältnis 400% oder mehr beträgt.

**5.** Verfahren zur Herstellung einer wässrigen, Gel-verkapselnden Harzpartikel-Emulsion nach Anspruch 3 oder 4, wobei die Monomer-Mischung zur Verwendung bei der Herstellung des Kernpartikels ferner ein vernetzbares Monomer umfasst.

**6.** Verfahren zur Herstellung einer wässrigen, Gel-verkapselnden Harzpartikel-Emulsion nach Anspruch 3 bis 5, wobei bei der Emulsionspolymerisation ein Emulgator, der durch die folgende Formel dargestellt wird, in einer Menge in einem Bereich von 0,1 bis 5 Massenteile hinsichtlich des Emulgators selbst, bezogen auf 100 Massenteile der Monomer-Mischung verwendet wird:

$$R\text{-}O\text{-}(CH_2CH_2O)_n\text{-}SO_3M,$$

wobei n für eine Zahl von 1 oder mehr und weniger als 5 steht, M für ein beliebiges von einem Metallion, einem Ammoniumion und einem Aminion steht und R für eine Alkylgruppe oder eine polycyclische Phenylgruppe steht, die eine Anzahl an Kohlenstoffatomen von 8 oder mehr und weniger als 20 aufweist.

**7.** Verfahren zur Herstellung einer wässrigen, Gel-verkapselnden Harzpartikel-Emulsion nach einem der Ansprüche 3 bis 6, wobei die den Keimpartikel bildende Hüllschicht zwei Schichten umfasst:
eine Zwischenschicht, die eine Hydrophilie aufweist, die geringer ist als die Hydrophilie des Kernanteils; und eine nicht-alkaliquellbare äußerste Schicht, die eine Hydrophilie aufweist, die geringer als die Hydrophilie der Zwischenschicht ist und die unter Verwendung eines hydrophoben Monomers gebildet wird.

8. Verfahren zur Herstellung einer wässrigen, Gel-verkapselnden Harzpartikel-Emulsion nach Anspruch 7, wobei das Material, das das hydrophobe Monomer zur Bildung der äußersten Schicht umfasst, ein vernetzbares Monomer umfasst.

**Revendications**

1. Emulsion de particules de résine encapsulant un gel aqueux comprenant une particule qui comprend :

une partie de cœur gonflable par un alcali comprenant un copolymère (méth)acrylique ayant un indice d'acide de 200 à 400 mg KOH/g ; et
une partie de résine encapsulant la partie de cœur et ayant une couche la plus extérieure non gonflable par un alcali de la particule, la couche la plus extérieure non gonflable par un alcali formée utilisant un monomère hydrophobe, dans laquelle :

la partie de cœur est un gel aqueux encapsulant un solvant,
la partie de résine a une épaisseur de 10 % ou moins du diamètre de la particule ; et
la particule a un diamètre de particule moyen de 1000 nm ou plus et 5000 nm ou moins ;

la partie de cœur est obtenue par copolymérisation d'un mélange de monomères comprenant :

un (méth)acrylate aliphatique (a1) dont le groupe alkyle a un nombre d'atomes de carbone de 3 ou moins ;
un monomère contenant un groupe carboxy (a2) ; et
un monomère (a3) ayant un nombre total d'atomes de carbone de 8 à 17 atomes à raison de 30 parties en masse ou moins quand la quantité totale des monomères (a1) à (a3) est de 100 parties en masse ;

dans laquelle le monomère (a3) ayant un nombre total d'atomes de carbone de 8 à 17 est un monomère à base de (méth)acrylate copolymérisable représenté par la formule suivante :

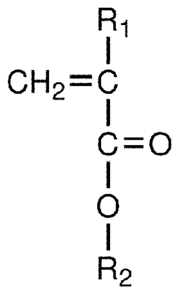

dans laquelle $R_1$ représente un atome d'hydrogène ou un groupe méthyle, et $R_2$ représente un groupe contenant un cycle benzène ou un cycle aliphatique ayant un nombre d'atomes de carbone de 4 à 13.

2. Emulsion de particules de résine encapsulant un gel aqueux selon la revendication 1, ayant en outre un ou plusieurs trous à la surface de la particule, et ayant un rapport du diamètre d'ouverture maximal des trous existant à la surface de la particule sur le diamètre de la particule de 10 % ou moins.

3. Procédé pour produire une émulsion de particules de résine encapsulant un gel aqueux comprenant :

l'utilisation d'une particule germe ayant une structure cœur-gaine et comprenant :

une partie de cœur gonflable par un alcali ; et
une couche de gaine ayant une couche la plus extérieure non gonflable par un alcali de la particule germe, la couche la plus extérieure non gonflable par un alcali formée utilisant un monomère hydrophobe, et

dans lequel la particule germe est une particule obtenue de la façon suivante : un mélange de monomères comprenant :

un (méth)acrylate aliphatique (a1) dont le groupe alkyle a un nombre d'atomes de carbone de 3 ou moins ;
un monomère contenant un groupe carboxy (a2) ; et
un monomère (a3) ayant un nombre total d'atomes de carbone de 8 à 17 atomes,
est soumis à une copolymérisation pour que soit obtenue une particule de cœur gonflable par un alcali comprenant un copolymère (méth)acrylique ayant un indice d'acide de 200 à 400 mg KOH/g, puis un matériau comprenant la particule de cœur et un monomère hydrophobe est soumis à une polymérisation en émulsion pour transformer la particule de cœur en une particule cœur-gaine dans laquelle la particule de cœur est couverte par une couche de gaine ayant une couche la plus extérieure non gonflable par un alcali de la particule germe, la couche la plus extérieure formée utilisant un monomère hydrophobe, et la particule cœur-gaine est soumise à un traitement de gonflement avec un alcali dans des conditions alcalines à un pH de 7,0 ou plus ; et
l'empilement d'une couche de résine non gonflable par un alcali de façon qu'elle soit la couche la plus extérieure de la particule sur la couche de gaine avec un matériau comprenant un monomère hydrophobe pour former une partie de résine non gonflable par un alcali, ce qui produit ainsi une émulsion de particules de résine encapsulant un gel aqueux ayant un diamètre de particule moyen des particules de 1000 nm ou plus et 5000 nm ou moins et ayant une épaisseur de la partie de résine de 10 % ou moins du diamètre de la particule dans un état où la partie de cœur est un gel aqueux encapsulant un solvant, dans lequel :

en tant que particule germe, une particule dans laquelle une particule de cœur gonflable par un alcali comprenant un copolymère (méth)acrylique ayant un indice d'acide de 200 à 400 mg KOH/g est recouverte par la couche de gaine est utilisée, la particule de germe ayant un diamètre de particule moyen de 500 nm ou plus après que la particule a été gonflée par un alcali, ayant un taux de gonflement par un alcali de 200 % ou plus, le taux de gonflement par un alcali étant déterminé par la formule suivante utilisant les diamètres de particule moyens mesurés avant et après gonflement de la particule par l'alcali ;
le maintien d'une forme de particule tout en ayant un taux de gonflement par un alcali élevé ; et
ayant une structure cœur-gaine :

$$\text{taux de gonflement par un alcali (\%)} = \{(\text{diamètre de particule moyen après que la particule a été gonflée par un alcali})^3 / (\text{diamètre de particule moyen avant que la particule soit gonflée par un alcali})^3 - 1\} \times 100,$$

dans lequel le monomère (a3) ayant un nombre total d'atomes de carbone de 8 à 17 est un monomère à base de (méth)acrylate copolymérisable représenté par la formule suivante :

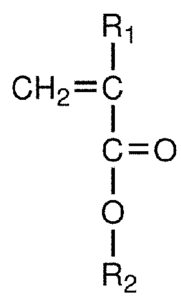

dans laquelle $R_1$ représente un atome d'hydrogène ou un groupe méthyle, et $R_2$ représente un groupe contenant un cycle benzène ou un cycle aliphatique ayant un nombre d'atomes de carbone de 4 à 13, et
dans lequel le mélange de monomères pour une utilisation dans la préparation de la particule de cœur comprend le monomère (a3) à raison de 30 parties en masse ou moins quand la quantité totale des monomères (a1) à (a3) est de 100 parties en masse.

**4.** Procédé pour produire une émulsion de particules de résine encapsulant un gel aqueux selon la revendication 3, dans lequel le taux de gonflement par un alcali est de 400 % ou plus.

5. Procédé pour produire une émulsion de particules de résine encapsulant un gel aqueux selon la revendication 3 ou 4, dans lequel le mélange de monomères pour une utilisation dans la préparation de la particule de cœur comprend en outre un monomère réticulable.

6. Procédé pour produire une émulsion de particules de résine encapsulant un gel aqueux selon les revendications 3 à 5, dans lequel, dans la polymérisation en émulsion, un agent émulsionnant représenté par la formule qui suit est utilisé en une quantité dans la plage de 0,1 à 5 parties en masse en termes de l'agent émulsionnant lui-même pour 100 parties en masse du mélange de monomères :

$$R\text{-}O\text{-}(CH_2CH_2O)_n\text{-}SO_3M$$

dans laquelle n représente un nombre de 1 ou plus et inférieur à 5, M représente l'un quelconque parmi un ion métallique, un ion ammonium, et un ion amine, et R représente un groupe alkyle ou un groupe phényle polycyclique ayant un nombre d'atomes de carbone de 8 ou plus et inférieur à 20.

7. Procédé pour produire une émulsion de particules de résine encapsulant un gel aqueux selon l'une quelconque des revendications 3 à 6, dans lequel la couche de gaine constituant la particule germe comprend deux couches de :

une couche intermédiaire ayant un caractère hydrophile inférieur au caractère hydrophile de la partie de cœur ; et
une couche la plus extérieure non gonflable par un alcali ayant un caractère hydrophile inférieur au caractère hydrophile de la couche intermédiaire, et formé par utilisation d'un monomère hydrophobe.

8. Procédé pour produire une émulsion de particules de résine encapsulant un gel aqueux selon la revendication 7, dans lequel un matériau comprenant un monomère hydrophobe pour former la couche la plus extérieure comprend un monomère réticulable.

[Figure 1]

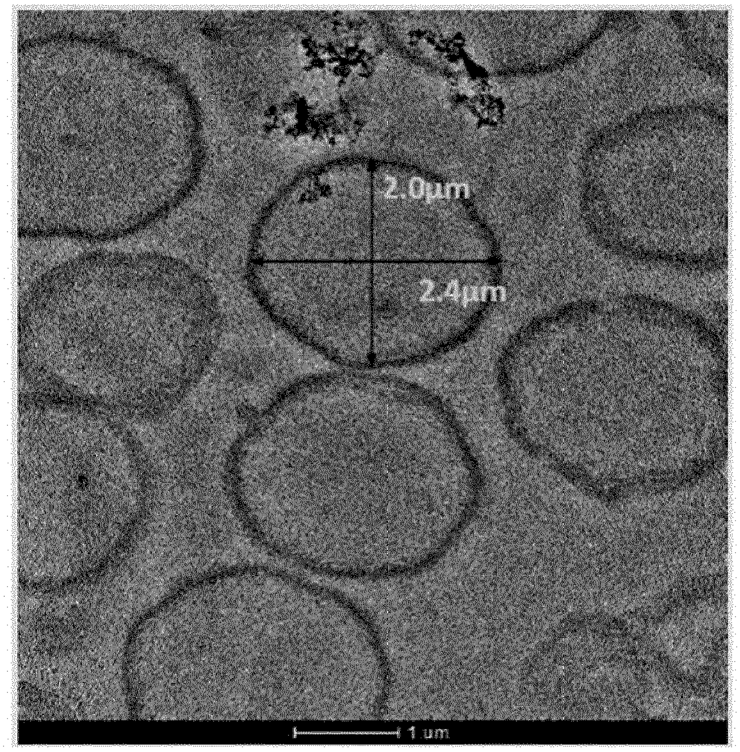


[Figure 2]

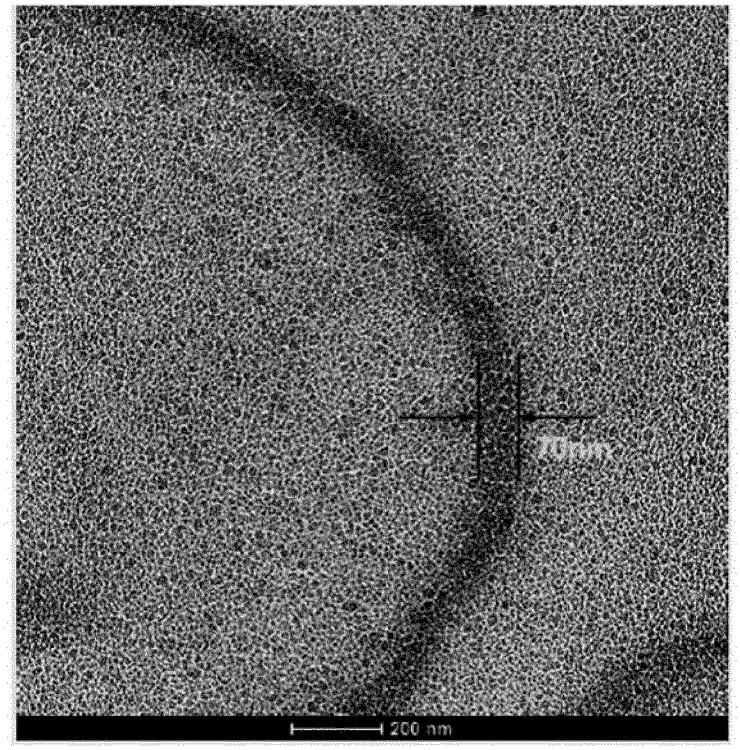

[Figure 3]

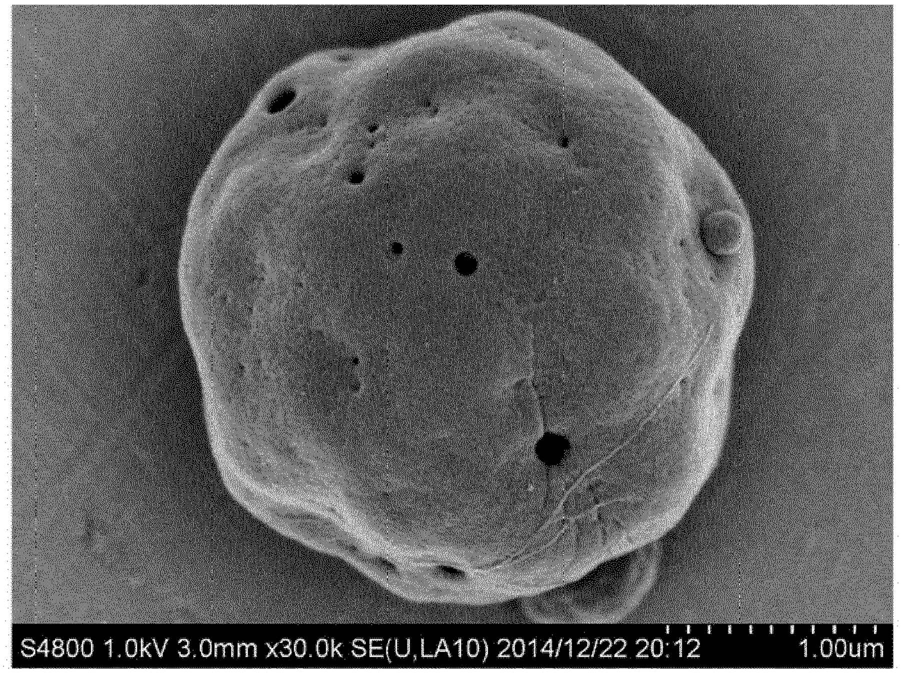


[Figure 4]

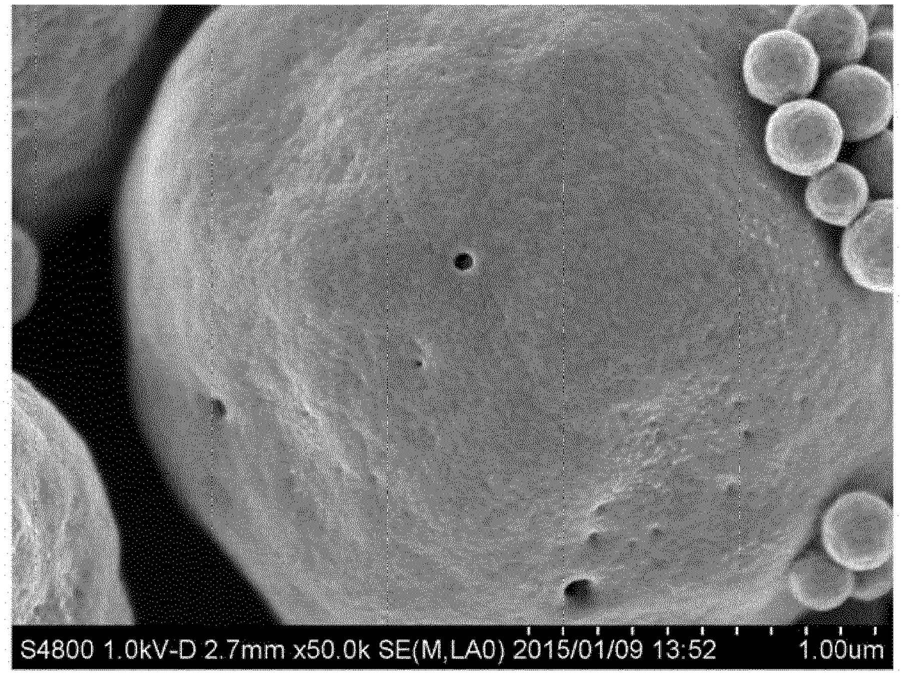

[Figure 5]

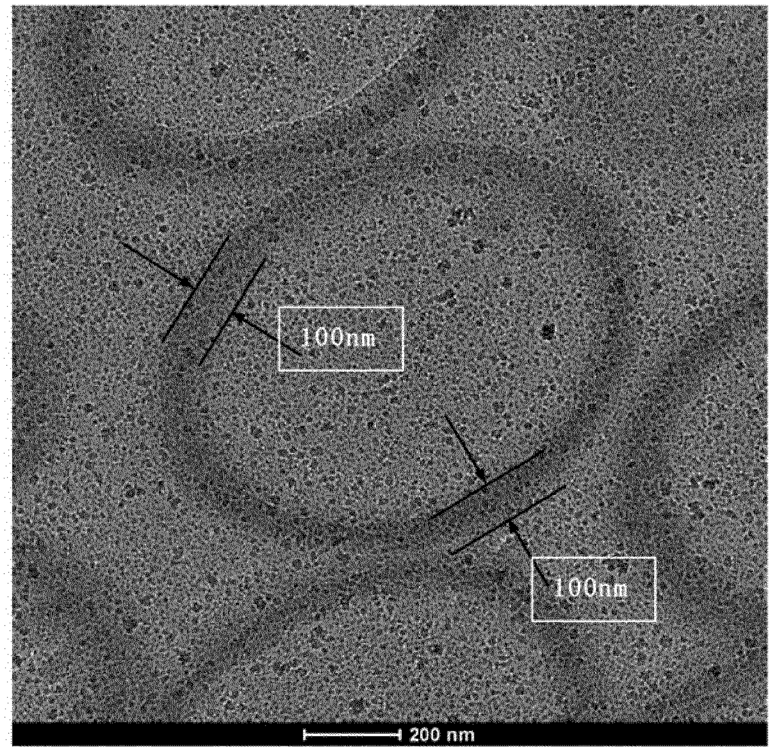

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2016024290 A1
- US 5360827 A
- JP 2774145 B
- JP 2679523 B
- JP 3035423 B